# EUROPÄISCHE PATENTSCHRIFT

(11) **EP 2 189 284 B1**
(45) Veröffentlichungstag und Bekanntmachung des Hinweises auf die Patenterteilung: **29.01.2014**
(21) Anmeldenummer: 09012864.6
(22) Anmeldetag: 12.10.2009
(51) Int. Cl.: B32B 37/10

(54) **Vorrichtung zum Laminieren eines Solarmoduls**
Apparatus for laminating a solar cell modul
Appareil de lamination d'un module de cellule solaire

(30) Priorität: 21.11.2008 EP 08405284
(43) Veröffentlichungstag der Anmeldung: 26.05.2010
(73) Patentinhaber: Komax Holding AG, 6036 Dierikon (CH)
(72) Erfinder: Meisser, Claudio, 6330 Cham (CH); Doudin, Roger, 6012 Obernau (CH); Bucher, Markus, 6033 Buchrain (CH)
(74) Vertreter: EGLI-EUROPEAN PATENT ATTORNEYS

(56) Entgegenhaltungen:
- EP-A2- 1 923 921
- WO-A1-98/38033
- DE-A1- 4 112 607
- DE-A1- 4 222 262
- DE-A1-102004 033 540
- US-B1- 6 481 482

## Beschreibung

Die Erfindung betrifft eine Vorrichtung zum Laminieren eines Solarmoduls nach dem Oberbegriff des Anspruchs 1.

Flächig ausgebildete Solarmodule weisen in ihrem Inneren Solarzellen auf, die vor Umwelteinflüssen geschützt werden müssen. Dieser Schutz besteht darin, dass die Solarzellen eingekapselt werden, beispielsweise beidseitig mit je einer Folie und auf einer Vorderseite mit einer Glasplatte bedeckt werden. Nach dem Zusammenstellen dieses mehrschichtigen Aufbaus wird das Werkstück laminiert. Hierzu wird das mehrschichtige Werkstück in einer Laminierpresse laminiert, wobei das Pressen des Moduls bei Unterdruck erfolgt. Der Prozess des Laminierens ist dabei zeitlich gestaffelt und es ist möglichst genau einzuhalten, wann das Vakuum, die Wärme und Presskraft aufzubringen sind. Während des Laminiervorgangs wird die Folie auf Vorder- und Rückseite der Solarzellen aufgeschmolzen und bildet nach ihrer Erstarrung einen dichten Einschluss der

Solarzellen.

Die Pressen zum Laminieren der Solarmodule bestehen zumeist aus zwei Teilen, nämlich einem Pressenoberteil und einem Pressenunterteil. Die einander korrespondierenden Pressenteile bilden (zumindest wenn sie in eine geeignete Position relativ zueinander gebracht sind) einen Hohlraum, im Folgenden auch Pressenraum genannt, in welchen das jeweilige Solarmodul einbringbar ist. Der Pressenraum ist evakuierbar, um das geforderte Vakuum zu erzeugen. Darüber hinaus befindet sich eine Heizvorrichtung in dem Pressenraum zur Erzeugung der geforderten Wärme.

Aus der EP 1 550 548 ist so eine Laminierpresse bekannt. Der Pressenraum (Hohlraum) dieser Laminierpresse ist durch eine flexible Membran in einen oberen und unteren Teil aufgeteilt, so dass diese Art Presse auch als "Membranpresse" bezeichnet wird. Während des Laminierprozesses wird ausschliesslich der untere Teil, in dem sich das Solarmodul befindet, evakuiert. Gleichzeitig wird die Membran in Richtung des unteren Pressenraums aufgrund des Unterdrucks gezogen. Dieser Effekt wird zusätzlich dadurch verstärkt, dass in dem oberen Teil des Pressenraums ein Überdruck erzeugt wird. Die Membran dient dabei als eigentliches Pressmittel, da sie in Anlage mit dem Solarmodul gebracht wird und die Folien gleichmässig gegeneinander und gegen das Solarmodul drückt.

Der äussere Rand der Membran ist mit dem Pressenoberteil fest verbunden, wodurch sich ein grosser unterer Pressenraum bildet. In diesem unteren Pressenraum ist ein Heizelement angeordnet und das Solarmodul wird auf diesem zum Laminieren abgelegt. Durch diese Anordnung muss ein recht grosser unterer Pressenraum evakuiert werden. Zusätzlich ist nachteilig, dass die Membran in der Regel aus einem Material (z.B. Gummi) besteht, welches eine relativ geringe Wärmeleitfähigkeit aufweist. Aus diesem Grunde kann dem Solarmodul über die dem Heizelement gegenüberliegende Seite des Solarmoduls (d.h. durch die Membran) nur ein relativ geringer Wärmefluss zugeführt werden. Die Membran erschwert somit eine Regelung der Zufuhr und Abfuhr von Wärme, sodass der Laminierprozess zeitlich verlängert wird.

Zudem ist die Befestigung der Membran an dem entsprechenden Pressenteil aufwendig. Die Membran wird an ihrem Rand in das Pressenteil eingespannt, wobei darauf zu achten ist, dass die Membran entlang des Randes jeweils gleichmässig eingespannt ist, damit keine ungleichen Spannungen in der Membran auftreten. Nur wenn die Membran gleichmässig auf das Solarmodul einwirkt, kann der Laminierprozess erfolgreich sein, was bei einer nicht richtig eingespannten Membran nicht gewährleistet ist.

Aus EP 0 339 275 A2 ist eine weitere Presse zum Laminieren eines Werkstücks bekannt. Diese Presse umfasst eine Vakuumkammer, in welcher das jeweilige Werkstück zwischen zwei in der Vakuumkammer platzierten, jeweils horizontal und parallel zueinander angeordneten Platten gepresst werden kann. Eine der beiden Platten dient als Auflageplatte für das Werkstück und ist in vertikaler Richtung relativ zu der anderen Platte bewegbar, welche in der Vakuumkammer fixiert ist und über der anderen der beiden Platten angeordnet. Dem Werkstück kann Wärme zugeführt werden über eine Heizvorrichtung, welche an der oberen der beiden Platten angeordnet ist. Die Vakuumkammer kann als Ganzes evakuiert werden über eine in die Vakuumkammer mündende Leitung. Die Vakuumkammer hat ein relativ grosses Volumen, sodass es relativ zeitaufwändig ist, während eines Laminierprozesses den in der Vakuumkammer herrschenden Luftdruck auf die jeweils gewünschten Werte zu bringen bzw. im gewünschten Rahmen zu verändern.

Eine weitere Laminierpresse ist aus DE-A-41 126 07 bekannt.

Es ist deshalb eine Aufgabe der Erfindung die vorgenannte Vorrichtung zum Laminieren von Solarmodulen weiterzuentwickeln und eine Laminierpresse bereitzustellen, mit der auf einfache Weise das Laminieren von Solarmodulen möglich ist.

Diese Aufgabe wird gelöst durch eine Vorrichtung zum Laminieren mit den Merkmalen des Anspruchs 1.

Diese Vorrichtung zum Laminieren eines Solarmoduls ist mit einer Presse zum Pressen und Erwärmen des jeweiligen Solarmoduls (im Folgenden auch "Laminierpresse" genannt) ausgestattet, welche Presse umfasst:
a) ein erstes Pressenteil und ein zweites Pressenteil, welche Pressenteile relativ zu einander bewegbar sind und in eine vorgegebene Stellung bringbar sind, in welcher zwischen dem ersten und dem zweiten Pressenteil ein Hohlraum ausgebildet ist, welcher Hohlraum evakuierbar ist,
b) eine im Hohlraum angeordnete Auflagefläche für das jeweilige Solarmodul,
c) einen Heizkörper, welcher im Hohlraum angeordnet ist und relativ zum ersten Pressenteil und zum zweiten Pressenteil und zur Auflagefläche derart bewegbar ist, dass das jeweilige Solarmodul mittels des Heizkörpers gegen die Auflagefläche pressbar ist, und
d) d einen oder mehrere Dichtkörper, wobei die jeweiligen Dichtkörper in einem Zwischenraum zwischen dem Heizkörper und dem ersten Pressenteil und/oder in einem Zwischenraum zwischen dem Heizkörper und dem zweiten Pressenteil derart angeordnet sind, dass sie einen geschlossenen, um den Heizkörper (50) umlaufenden Ring bilden.

Gemäss der Erfindung umfassen die jeweiligen Dichtkörper (61) jeweils einen flexiblen Schlauch (61.1), dessen Volumen (V) durch Verändern eines im Schlauch (61.1) herrschenden Drucks (P) veränderbar ist, wobei die jeweiligen Dichtkörper (61) bei einem ersten vorbestimmten Volumen (V1) nicht mit dem Heizkörper (50) und/oder einem der Pressenteile (3, 4) in Kontakt sind und bei einem zweiten vorbestimmten Volumen (V2) mit dem Heizkörper (50) und mindestens einem der Pressenteile (3, 4) derart in Kontakt gebracht sind, dass der Hohlraum (37) durch den Heizkörper (50) und die jeweiligen Dichtkörper (61) in mindestens zwei Kammern (37a, 37b) unterteilt ist, welche luftdicht gegeneinander separiert sind, wobei eine der Kammern (37a, 37b) die Auflagefläche (29) umfasst,

Da eine der beiden Kammern die Auflagefläche für das jeweilige Solarmodul umfasst, findet das jeweilige Solarmodul in einer der beiden Kammern Platz und kann zur Durchführung eines Laminierprozesses zwischen dem Heizkörper und der Auflagefläche angeordnet werden.

Dadurch, dass der Hohlraum (im Folgenden gegebenenfalls auch "Pressenraum" genannt) mittels der jeweiligen Dichtkörper in mindestens zwei luftdicht gegeneinander separierte Kammern unterteilt bzw. unterteilbar ist, wird erreicht, dass das Ändern eines im Hohlraum herrschenden Gasdrucks vereinfacht werden kann. Beim Durchführen eines Laminierprozesses ist es in bestimmten Phasen des Prozesses nicht notwendig, den Gasdruck im gesamten Hohlraum gleichmässig zu verändern. Es kann beispielsweise ausreichen, lediglich den Gasdruck in einer der beiden Kammern zu verändern. Da jede der beiden Kammern jeweils nur ein Bruchteil des Volumens des gesamten Hohlraums umfassen, kann offensichtlich der Gasdruck in einer der beiden Kammern schneller und in der Regel mit einem geringeren Energieaufwand geändert werden als wenn der Gasdruck im gesamten Hohlraum in demselben Masse geändert werden müsste. Dieser Vorteil ist besonders deutlich, wenn das jeweilige Solarmodul einem reduzierten Gasdruck ausgesetzt werden soll, beispielsweise bei einem Prozessschritt, bei welchem ein Entgasen des Solarmoduls in einem Vakuum durchgeführt werden soll.

Die Unterteilung des Hohlraums in zwei luftdicht gegeneinander separiert Kammern ermöglicht es weiterhin, eine auf den Heizkörper wirkende Kraft zu erzeugen, falls die in den beiden Kammern herrschenden Gasdrücke unterschiedlich sind. Durch Realisierung eines Unterdrucks in derjenigen Kammer, in welcher sich das jeweilige Solarmodul befindet, im Vergleich zu dem in der anderen Kammer herrschenden Luftdruck kann beispielsweise erreicht werden, dass der Heizkörper in Richtung auf die Auflagefläche gedrückt wird, um den Heizkörper gegen das Solarmodul zu drücken und das jeweilige Solarmodul somit zu pressen. Durch eine Steuerung der in den beiden Kammern jeweils herrschenden Gasdrücke ist es demnach möglich, die Position des Heizkörpers relativ zur Auflagefläche bzw. relativ zu dem jeweiligen Solarmodul mit einfachen und kostengünstigen Mitteln schnell und präzise zu verändern.

Im Vergleich zu einer aus EP 1 550 548 bekannten Membranpresse weist die erfindungsgemässe Vorrichtung zum Laminieren weiterhin den Vorteil auf, dass der Heizkörper eine effiziente Möglichkeit bietet, das jeweilige Solarmodul auch von derjenigen Seite des Solarmoduls, welche von der Auflagefläche abgewandt ist, zu heizen, zumal der Heizkörper beim Pressen mit dem jeweiligen Solarmodul in Kontakt gebracht werden kann und für die Konstruktion des jeweiligen Heizkörpers Werkstoffe (z.B. metallische Werkstoffe) gewählt werden könnten, welche eine wesentlich höhere Wärmeleitfähigkeit aufweisen im Vergleich zu denjenigen Werkstoffen (z.B. Gummi), welche für die Herstellung einer Membran einer konventionellen Membranpresse geeignet sind.

Bei einer Ausführungsform der erfindungsgemässen Vorrichtung zum Laminieren ist eine der Kammern (im Folgenden "erste Kammer" genannt) zwischen dem ersten Pressenteil, den jeweiligen Dichtkörpern und dem Heizkörper ausgebildet und eine andere der Kammern (im Folgenden "zweite Kammer" genannt) zwischen dem zweiten Pressenteil, den jeweiligen Dichtkörpern und dem Heizkörper ausgebildet. Die Auflagefläche für das jeweilige Solarmodul kann beispielsweise am zweiten Pressenteil ausgebildet sein. In diesem Fall dient die zweite Kammer der Aufnahme des Solarmoduls zum Zwecke des Laminierens.

Für den Fall, dass die Vorrichtung einen einzigen Dichtkörper umfasst, kann der Dichtkörper als einstückiger Ring ausgebildet sein. Letzteres vereinfacht den Einbau des Dichtkörpers bei einer Montage der Vorrichtung oder den Austausch des Dichtkörpers, falls dieser ersetzt werden muss.

Wie bereits erwähnt, ist das Volumen des Schlauches derart veränderbar, dass der Dichtkörper bei einem ersten vorbestimmten Volumen nicht mit dem Heizkörper und/oder einem der Pressenteile in Kontakt ist und bei einem zweiten vorbestimmten Volumen mit dem Heizkörper und mit einem der Pressenteile in Kontakt ist. Falls das Volumen des Schlauches derart gewählt ist, dass der Dichtkörper mit dem Heizkörper und einem der Pressenteile in Kontakt gebracht ist, dann ist der Dichtkörper in einem Zustand, in dem er die beiden Kammern gasdicht gegeneinander abdichtet. Falls hingegen das Volumen des Schlauches derart gewählt ist, dass der Dichtkörper nicht mit dem Heizkörper oder einem der Pressenteile in Kontakt gebracht ist, dann ist der Dichtkörper in einem Zustand, in dem er die beiden Kammern nicht gasdicht gegeneinander abdichtet, sodass eine für ein Gas durchgängige Verbindung (z.B. in Form eines Spaltes) zwischen den beiden Kammern besteht. Durch eine Veränderung des Volumens des Schlauches kann somit eine Verbindung zwischen den beiden Kammern wahlweise geöffnet oder geschlossen werden. Falls das Volumen des Schlauchs so gewählt ist, dass der Dichtkörper nicht mit dem Heizkörper in Kontakt steht, dann kann der Heizkörper relativ zum Dichtkörper bewegt werden, ohne dass der Dichtkörper diese Bewegung (beispielsweise durch Reibung zwischen Dichtkörper und Heizkörper) behindert.

Diese Art des Dichtkörpers ermöglicht es, einerseits den Abstand des Heizkörpers bezüglich der Auflagefläche über einen relativ grossen Bereich zu verändern (zu diesem Zweck ist es vorteilhaft, das Volumen des Schlauchs so zu wählen, dass der Dichtkörper den Heizkörper nicht berührt); andererseits kann für verschieden grosse Abstände des Heizkörpers bezüglich der Auflagefläche jeweils das Volumen des Schlauchs so gewählt werden, dass der Dichtkörper mit dem Heizkörper jeweils so in Kontakt gebracht wird, dass die beiden Kammern luftdicht gegeneinander abgedichtet sind. Ein wesentlicher Vorteil dieser Art Dichtkörper ist darin zu sehen, dass die erfindungsgemässe Vorrichtung zum Laminieren - ausgestattet mit dieser Art Dichtkörper - eine Bearbeitung verschiedener Solarmodule mit unterschiedlicher Dicke erleichtert: durch eine Variation des Volumens des Schlauchs kann eine den jeweiligen Dicken der Solarmodule entsprechende Anpassung der jeweiligen Dichtelemente erreicht werden, ohne dass das jeweilige Dichtelement ausgetauscht werden muss.

In einer Fortentwicklung dieser Variante umfasst das Dichtelement einen Schlauch, welcher aufblasbar ist, wobei die Vorrichtung zum Laminieren Mittel zum Verändern eines im Schlauch herrschenden Gasdrucks aufweist. In diesem Fall kann das Volumen des Schlauchs durch Ändern des Gasdrucks verändert werden. In diesem Fall kann der Schlauch so angeordnet werden, dass das Dichtelement beim Aufblasen des Schlauchs in Richtung auf den Heizkörper expandiert, um das Dichtelement in Kontakt mit dem Heizkörper zu bringen. In einer bevorzugten Ausführung dieser Variante ist der Schlauch derart ausgelegt, dass er beim Aufblasen im Wesentlichen parallel zur Auflagefläche zur expandiert. In diesem Fall kann die Vorrichtung zum Laminieren besonders einfach an Solarmodule unterschiedlicher Dicke angepasst werden, insbesondere wenn der Heizkörper eine Seitenfläche aufweist, welche senkrecht zur Auflagefläche gerichtet ist, sodass das Dichtelement durch Aufblasen des Schlauchs mit dieser Seitenfläche in Kontakt gebracht werden kann.

In den vorstehend genannten Ausführungsformen kann das Volumen des jeweiligen Schlauchs auch dadurch verändert werden, dass - anstelle eines Gases - ein anderes druckübertragendes Medium, z.B. eine Flüssigkeit, dem Innenraum des Schlauchs zugeführt oder aus dem Innenraum des Schlauchs abgeführt wird. Anstelle eines flexiblen Schlauchs kann auch ein anderer flexibler Hohlkörper, beispielsweise ein flexibler Balg, verwendet werden.

Gemäss einer weiteren Ausführungsform umfasst das erste Pressenteil einen den Hohlraum begrenzenden Deckel und eine Dichtvorrichtung, wobei die Dichtvorrichtung aufweist: einen das jeweilige Solarmodul umgebenden Rahmen (auch "Dichtrahmen" genannt) mit einer ersten Kontaktfläche für den Deckel und mit einer zweiten Kontaktfläche für das zweite Pressenteil, eine an der ersten Kontaktfläche zwischen dem Deckel und dem Rahmen angeordnete Dichtung und eine an der zweiten Kontaktfläche zwischen dem Rahmen und dem zweiten Pressenteil angeordnete Dichtung.

Die Dichtvorrichtung bietet den Vorteil, das die Dichtvorrichtung alle Dichtelemente umfasst, die benötigt werden, um den Deckel der Presse gegen das zweite Pressenteil und somit den Hohlraum der Presse gegen die äussere Umgebung der Presse abzudichten.

Der Rahmen ist dazu ausgebildet, die Dichtungen zu tragen bzw. aufzunehmen, so dass die den Kontaktflächen des Rahmens gegenüberliegenden Grenzflächen des Deckels des ersten Pressenteils und des zweiten Pressenteils nicht entsprechend ausgebildet sein müssen. Zudem ist die Anordnung des Rahmens leicht möglich und im Falle einer Reparatur der Dichtung ist der Rahmen zusammen mit den Dichtungen leicht austauschbar.

Weiterhin ist vorteilhaft, dass die Dichtvorrichtung an wenigstens einem Bolzen angelenkt ist, der von einer Aussenseite des ersten Pressenteils den Rahmen an der dem zweiten Pressenteil gegenüberliegenden Seite hält. Die Montage der Dichtvorrichtung erfolgt demnach von ausserhalb der Presse, was die Montage und Demontage der Dichtvorrichtung erleichtert. In dem Rahmen kann auch eine Lüftungsbohrung, die von wenigstens einem der beiden Kammern des Hohlraums nach aussen geführt ist, angeordnet sein. Hierdurch kann auf eine separate Be- oder Entlüftungsbohrung in dem entsprechenden Pressenteil verzichtet werden, was produktionstechnisch vorteilhaft ist.

Bevorzugt ist zwischen dem Rahmen der Dichtvorrichtung und dem Deckel des ersten Pressenteils und dem zweiten Pressenteil eine Dichtung, insbesondere eine Schnurdichtung, angeordnet. Die Schnurdichtung ist in dem Rahmen längs zu einer Aussenseite der Presse angeordnet. Die Schnurdichtung ist aus einem insbesondere flexiblen Material gebildet, sodass bei geschlossener Presse, wenn beide Pressenteile aneinander liegen, die Schnurdichtungen zusammengedrückt werden und die Kontaktfläche der jeweiligen Schnurdichtung zu dem Deckel des ersten Pressenteils bzw. zum zweiten Pressenteil vergrössert ist. Dadurch, dass der Rahmen von aussen an dem Deckel des ersten Pressenteils angelenkt ist, ist der Dichtrahmen mit Spiel relativ zum Deckel angeordnet. Durch das Zusammenführen der beiden Pressenteile wird deshalb die Schnurdichtung zwischen Dichtrahmen und dem ersten Pressenteil ebenfalls zusammengedrückt, wodurch sich die Kontaktfläche und damit die Dichtung erhöht.

Gemäss einer Weiterentwicklung der vorstehend genannten Dichtvorrichtung ist der jeweilige Dichtkörper der Presse derart angeordnet, dass der Dichtkörper am Rahmen luftdicht anliegt oder in einer im Rahmen ausgebildeten Nut luftdicht eingebettet ist. Demnach ist die Kontaktfläche für den Dichtkörper, welche am ersten Pressenteil ausgebildet sein muss, um mit dem Dichtkörper einen Zwischenraum zwischen dem Heizkörper und dem ersten Pressenteil abdichten zu können, am Rahmen der Dichtvorrichtung ausgebildet. Dadurch entfällt die Notwendigkeit, eine derartige Kontaktfläche für den Dichtkörper direkt am Deckel des ersten Pressenteils auszubilden. Letzteres vereinfacht die Herstellung des ersten Pressenteils.

Gemäss einer weiteren Ausführungsform der erfindungsgemässen Vorrichtung ist der Heizkörper an einem der Pressenteile bewegbar befestigt ist, wobei die Vorrichtung Mittel zum Bewegen des Heizkörpers senkrecht zur Auflagefläche umfasst. Dies ermöglicht eine kompakte Bauweise der Presse.

Gemäss einer weiteren Ausführungsform der erfindungsgemässen Vorrichtung umfasst der Heizkörper eine Platte und mindestens ein erstes Heizelement zum Heizen der Platte, wobei das jeweilige Heizelement auf einer von der Auflagefläche abgewandten Seite der Platte angeordnet ist. Die Platte bietet den Vorteil, dass sie als gasdichte Trennwand geeignet ist. Sie ist bevorzugt aus einem Material hoher Steifigkeit und hoher Wärmeleitfähigkeit gefertigt, beispielsweise aus einem Metall, z.B. Stahl oder Aluminium. Die Platte gewährleistet dadurch einerseits eine präzise kontrollierbare Kraftübertragung beim Pressen des jeweiligen Solarmoduls und einen gleichmässig über die gesamte Platte verteilten Wärmefluss.

In einer Weiterentwicklung der vorstehend genannten Ausführungsform ist an der Platte des Heizkörpers auf einer der Auflagefläche zugewandten Seite ein elastisch deformierbarer Körper derart angeordnet, dass das jeweilige Solarmodul beim Pressen des Solarmoduls mittels dieses elastisch deformierbaren Körpers von der Platte separiert ist, wobei der elastisch deformierbare Körper eine Steifigkeit aufweist, welche geringer ist als die Steifigkeit der Platte. Der elastisch deformierbare Körper kann beispielsweise als eine aus einem elastischen Material gebildete Matte oder als ein mit einer Flüssigkeit gefülltes Kissen ausgebildet sein. Der Mantel des mit Flüssigkeit gefüllten Kissens kann aus einem elastischen Material wie Gummi oder aus dünnem Blech ausgeführt sein.

Der Heizkörper wird zum Laminieren in Kontakt mit dem Solarmodul gebracht, wobei gleichmässig Druck auf eine Oberfläche des Solarmoduls ausgeübt wird. Durch den elastisch deformierbaren Körper, welcher auf der dem Solarmodul zugewandten Seite der Platte des Heizkörpers angeordnet ist, können Unebenheiten der Platte und/oder des Solarmoduls bzw. räumliche Schwankungen des Abstands zwischen der Platte des Heizkörpers und des Solarmoduls ausgeglichen werden. Vor allem aber werden so Kantenpressungen, welche an Randbereichen des Solarmoduls auftreten können, reduziert oder vermieden. Zusätzlich muss die entsprechende Seite des Heizelements nicht plan ausgeführt werden, was insbesondere bei röhren- oder stangenförmigen Heizelementen von Vorteil ist. Das Heizelement bzw. die Platte und/oder der elastisch deformierbare Körper bilden eine luftundurchlässige Trenneinrichtung. Weiterhin ist es vorteilhaft, wenn der elastisch deformierbare Körper eine hohe Wärmeleitfähigkeit aufweist, um den Wärmeübergang von dem Heizelement des Heizkörpers zum Solarmodul zu optimieren.

Besonders vorteilhaft ist es, wenn das jeweilige Pressenteil wenigstens ein Hebeelement, insbesondere einen Zylinder aufweist, an dem die Presseinrichtung angelenkt ist. Mit einem Zylinder lässt sich die vertikale Bewegung des Heizkörpers auf einfache Art und Weise bewerkstelligen. Der Zylinder ist mit dem Heizkörper auf einer dem Solarmodul gegenüberliegenden Seite des Heizkörpers verbunden. Der Zylinder ist mit dem jeweiligen Pressenteil derart verbunden, dass durch die Anlenkung des Zylinders keine Undichtigkeiten in dem Pressenraum entstehen. Insbesondere weist der Anlenkungspunkt eine Abdichtung auf. Vorteilhafterweise weist das jeweilige Pressenteil mehrere Zylinder auf, an denen die Presseinrichtung angelenkt ist. Hierdurch können die Zylinder grösser oder kleiner gewählt werden und die gleichmässige Bewegung der Presseinrichtung wird erleichtert.

Nach einer bevorzugten Weiterbildung weist das untere Pressenteil eine Auflageplatte für das Solarmodul auf, wobei in der Auflageplatte ein zweites Heizelement angeordnet ist. Die Auflageplatte dient zur Auflage des Solarmoduls in dem zweiten Pressenteil. Im Idealfall ist die Auflageplatte in dem zweiten Pressenteil integriert, insbesondere einstückig mit diesem verbunden. Durch die Integration des weiteren Heizelements in die Auflageplatte ist das Solarmodul beidseitig erwärmbar. Das Solarmodul weist, wie oben bereits dargestellt, auf beiden Seiten jeweils eine Folie auf, die mittels des Pressvorgangs laminiert werden. Die beidseitige Erwärmung des Solarmoduls bietet den Vorteil, die Heizelemente jeweils kleiner ausbilden zu können, als das der Fall wäre, wenn das Solarmodul nur einseitig erwärmt würde. Weiterhin kann durch die beidseitige Erwärmung auch eine Aufwärmphase des Solarmoduls verkürzt werden, was bei der Herstellung des Solarmoduls zeitliche und finanzielle Vorteile ermöglicht.

Eine weitere Ausführungsform der erfindungsgemässen Presse ist mit einem oder mehreren Distanzhaltern zum Limitieren einer Distanz zwischen dem Heizkörper und der Auflagefläche ausgestattet, wobei der jeweilige Distanzhalter derart angeordnet ist, dass der jeweilige Distanzhalter eine zur Auflagefläche gerichtete Bewegung des Heizkörpers blockiert, wenn die Distanz zwischen dem Heizkörper und der Auflagefläche einen vorgegebenen Wert erreicht. Der jeweilige Distanzhalter kann beispielsweise ein zwischen der Auflagefläche und dem Heizkörper angeordneter Körper sein. Der jeweilige Distanzhalter kann beispielsweise ein am Heizkörper befestigter Körper sein, wobei die Presse einen mechanischen Anschlag für den Distanzhalter umfasst. Alternativ kann der jeweilige Distanzhalter ein an der Auflagefläche angeordneter Körper sein, welcher einen mechanischen Anschlag für den Heizkörper bildet.

Gemäss einer bevorzugten Ausgestaltung der Erfindung ist der Distanzhalter als Stützrahmen ausgebildet und in einem Bereich der Auflageplatte angeordnet, insbesondere umlaufend um ein entsprechendes Solarmodul, wobei vorzugsweise der Stützrahmen eine Höhe aufweist, die ungefähr einer Höhe eines Solarmoduls, insbesondere eines fertigen Solarmoduls, entspricht, zur Abstützung des Heizkörpers. Hierdurch wird verhindert, dass der Heizkörper seitlich unterhalb der Höhe des Solarmoduls verfahren werden kann und eine Kantenpressung auftritt, die Ursache für eine Beschädigung einerseits der Solarzellen und des Heizkörpers andererseits sein könnte. Durch die Auflage des Heizkörpers auf dem Stützrahmen wird zudem sichergestellt, dass eine auf das Solarmodul applizierte Kraft nicht zu gross ist.

Gemäss einer Weiterbildung der Erfindung ist der Stützrahmen nicht umlaufend ausgebildet. Vielmehr weist der Stützrahmen mehrere Stützrahmenelemente auf, die zusammen eine stützende Funktion erfüllen. Anstelle eines geschlossenen Rahmens sind somit auch einzelne plattenförmige Elemente oder Teile vorgesehen, die zudem einzeln auf dem unteren Pressenteil angeordnet sind. Um ungleichmässige Verformungen des Heizkörpers auszugleichen, können die Stützrahmenelemente unterschiedliche Höhen aufweisen. Die Elemente sind beabstandet zueinander auf dem Pressenteil angeordnet. Alternativ können sie auch lückenlos angeordnet sein.

Gemäss einem weiteren Ausführungsbeispiel und alternativ zu den vorherigen Ausführungsbeispielen, ist der Stützrahmen an das erste Pressenteil angelenkt, wobei der Stützrahmen bei Auflage des ersten Pressenteils auf dem zweiten Pressenteil in Kontakt mit der Auflageplatte ist. Durch die Anlenkung des Stützrahmens an dem ersten Pressenteil weist die Auflageplatte eine Aufnahme für das Solarmodul auf. Im übrigen ist die Auflageplatte plan ausgeführt. Der Stützrahmen ist in dem oberen Pressenteil im Bereich des Heizkörpers angeordnet. Dadurch ist der Stützrahmen mit der Presseinrichtung vertikal innerhalb des Hohlraums verfahrbar.

Gemäss einer bevorzugten Weiterbildung der Erfindung ist zwischen dem ersten und dem zweiten Pressenteil eine Dichtung angeordnet, die der Abdichtung zu einer Umgebung des Hohlraums dient. Zur Erzeugung eines Vakuums innerhalb des Hohlraums ist eine Kontaktfläche zwischen den Pressenteilen abzudichten.

Nach einer besonders vorteilhaften Weiterentwicklung der Erfindung weist das erste Heizelement nebeneinander angeordnete Heizmittel auf, für eine über das Heizelement verteilte gleichmässige Wärmeabstrahlung. Die nebeneinander angeordneten Heizmittel können Rohre sein, durch die ein Heizmedium transportierbar ist, insbesondere ein Fluid. Als Heizmedium ist besonders öl oder eine andere geeignete Flüssigkeit geeignet.

Nach einer besonders vorteilhaften Weiterbildung wird das Solarmodul durch in den Hohlraum eingebrachte Heissluft erwärmt. Die erste Kammer ist während des Laminierprozesses mit Druckluft beaufschlagt, die über den Be- und Entlüftungskanal zugeführt wird und ausserhalb der Laminierpresse erwärmt wird. Hierdurch wird das Heizelement erwärmt, welches die Wärme bei Auflage auf dem Solarmodul an selbiges abgibt. Die erste Kammer ist alternativ auch durch Heizstrahler erwärmbar, die an dem ersten Pressenteil innerhalb der ersten Kammer angeordnet sind. Nach einer besonderen Weiterentwicklung sind an dem ersten Pressenteil innerhalb des Hohlraums Induktionsspulen angelenkt, die das Heizelement induktiv erwärmen.

Nachfolgend werden anhand der Zeichnung bevorzugte Ausführungsbeispiele näher erläutert, wobei die in Fig. 1-5 dargestellten Ausführungsformen von Laminierpressen nicht unter den Schutzumfang der Patentansprüche fallen. Es zeigen:
- Fig. 1: einen Längsschnitt durch eine erste Ausführungsform einer Laminierpresse in geöffnetem Zustand,
- Fig. 2: einen Längsschnitt durch die Laminierpresse gemäss Fig. 1, wobei die Laminierpresse in geschlossenem Zustand dargestellt ist,
- Fig. 3: einen Längsschnitt durch die Laminierpresse in geschlossenem Zustand gemäss Fig. 2, beim Pressen eines Solarmoduls,
- Fig. 4: einen Längsschnitt durch die Laminierpresse in geschlossenem Zustand gemäss Fig. 3, während des Laminierprozesses,
- Fig. 5: einen Ausschnitt eines Endbereiches einer zweiten Ausführungsform der Laminierpresse (in geschlossenem Zustand dargestellt),
- Fig. 6: eine perspektivische Draufsicht auf ein Heizelement,
- Fig. 7: einen Längsschnitt durch eine dritte Ausführungsform der Laminierpresse (in geschlossenem Zustand dargestellt), mit einer geschlossenen Verbindung zwischen einer ersten Kammer und einer zweiten Kammer in einem Hohlraum,
- Fig. 8: einen Längsschnitt gemäss Fig. 7, wobei die Verbindung zwischen den beiden Kammern offen ist.

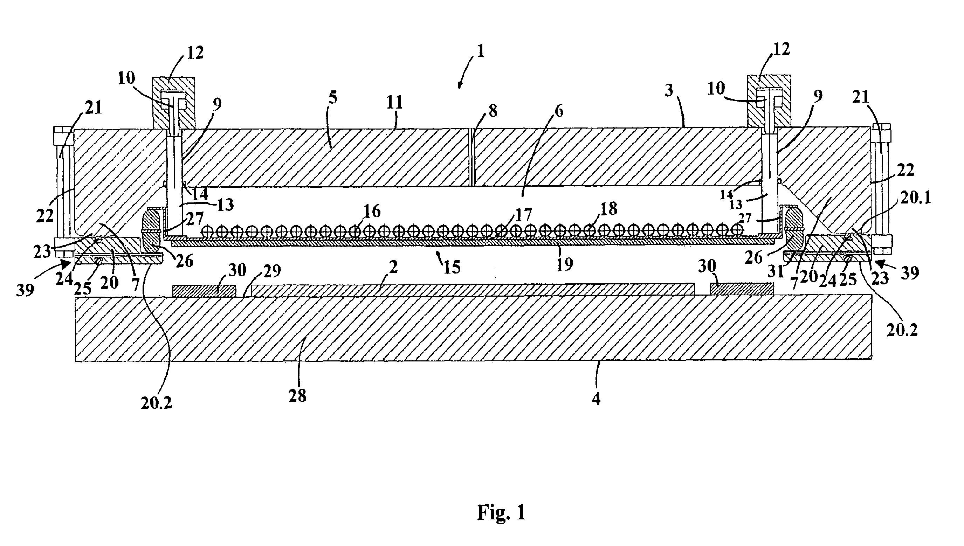

In den Figuren 1 bis 4 ist eine Laminierpresse 1 in einem Längsschnitt dargestellt. Die Laminierpresse 1 ist eine Einrichtung zum Laminieren von Solarmodulen, die in der Regel mehrschichtig aufgebaut sind. In den Figuren 1 bis 4 ist ein einzelnes Solarmodul 2 dargestellt, das zur besseren Veranschaulichung nur eine Schicht aufweist.

Die Laminierpresse 1 ist im Wesentlichen zweigeteilt, weist nämlich ein erstes Pressenteil 3 und ein zweites Pressenteil 4 auf. Die beiden Pressenteile 3 und 4 korrespondieren zueinander und sind gegeneinander beweglich. Eine Einrichtung, die beide Pressenteile 3 und 4 miteinander verbindet ist in den Figuren nicht dargestellt. Das erste und zweite Pressenteil 3 und 4 sind in vertikaler Richtung übereinander angeordnet, wobei das zweite Pressenteil 4 unterhalb des ersten Pressenteils 3 angeordnet ist. Das zweite Pressenteil 4, das zur Aufnahme des Solarmoduls 2 vorgesehen ist, wird demnach auch als unteres Pressenteil bezeichnet. Das erste Pressenteil 3 danach auch als oberes Pressenteil. Das erste Pressenteil 3 umfasst einen Deckel 5, der im Wesentlichen parallel zu dem zweiten Pressenteil 4 angeordnet ist.

Auf einer zum zweiten Pressenteil 4 gerichteten Seite des Deckels 5 ist eine grössere Ausnehmung 6 angeordnet. Diese Ausnehmung 6 wird seitlich durch Vorsprünge 7 begrenzt und umschlossen. Die Vorsprünge 7 sind umlaufend ausgebildet, so dass die Ausnehmung 6 eine Art umgedrehte Mulde oder Wanne bildet.

Der Deckel 5 weist mehrere Durchbrechungen auf, die als vertikale Bohrungen ausgebildet sind. Eine solche Bohrung dient als Be- und Entlüftungskanal 8 und ist zentral in dem Deckel 5 angeordnet. Neben dem in den Figuren dargestellten Be- und Entlüftungskanal 8 können weitere Ent-oder Belüftungskanäle in dem Deckel 5 vorgesehen sein. Weitere in dem Deckel 5 angeordnete Durchbrechungen dienen als Aufnahmeschacht 9 für jeweils ein Hebeelement. In den Figuren 1 bis 4 sind jeweils zwei Aufnahmeschächte 9 dargestellt, wobei die Laminierpresse 1 weitere Aufnahmeschächte mit Hebeelementen aufweist.

Die Hebeelemente, die in den Aufnahmeschächten 9 angeordnet sind, sind als Zylinder 10 ausgebildet und werden pneumatisch betrieben. Auf einer Oberseite 11 des Deckels 5 sind jeweils über den Aufnahmeschächten 9 Einrichtungen 12 vorgesehen, in denen die Zylinder 10 lagern. Die Einrichtungen 12 sind derart dimensioniert, dass in den Aufnahmeschächten 9 im Wesentlichen Kolben 13 der Zylinder 10 angeordnet sind und der Zylinder 10 in den Einrichtungen 12 lagert. Die Kolben 13 sind länger als die Aufnahmeschächte 9 ausgebildet und erstrecken sich bis in die Ausnehmung 6 des Deckels 5. In einem Endbereich der Aufnahmeschächte 9 ist eine Dichtung 14 angeordnet, die den Aufnahmeschacht 9 gegenüber der Ausnehmung 6 abdichtet. Die Dichtung 14 ist im vorliegenden Ausführungsbeispiel als Ringdichtung ausgebildet, die den Kolben 13 des Hebeelements seitlich umschliesst.

Am Ende der Kolben 13, die in die Ausnehmung 6 des Deckels 5 hineinragen, ist ein Heizkörper 15 angelenkt. Der Heizkörper 15 erstreckt sich zu einem Grossteil zwischen den Kolben 13. Der Heizkörper 15 umfasst eine durchgehend ausgebildete Platte 17 und ein Heizelement 16, wobei das Heizelement 16 auf der vom Solarmodul 2 abgewandten Seite der Platte 17 angeordnet ist und im vorliegenden Beispiel mehrere Heizmittel 18 umfasst. Die Platte 17 ist derart ausgebildet, dass sie leicht mit den Enden der Kolben 13 verbindbar ist. Alternativ dazu erfolgt die Anlenkung der Platte 17 an die Kolben 13 über Verbindungsmittel, die in den Figuren nicht dargestellt sind. Auf einer Unterseite des Heizelementes 16 ist ein elastisch deformierbarer Körper 19 angeordnet, welcher plan an der Platte 17 anliegt und in Richtung des unteren Pressenteils 4 weist.

Der Körper 19 ist derart angeordnet, dass das jeweilige Solarmodul 2 beim Pressen des Solarmoduls 2 mittels dieses Körpers 19 von der Platte 17 separiert ist, wobei der Körper 19 eine Steifigkeit aufweist, welche geringer ist als die Steifigkeit der Platte 17. Der Körper 19 kann auf verschiedene Weisen realisiert sein, z.B. als eine aus einem elastischen Material gebildete Matte oder als ein mit einer Flüssigkeit gefülltes Kissen.

Eine Verbindung des Körpers 19 mit der Platte 17 erfolgt vornehmlich mechanisch. Die Verbindung mittels eines Klebemittels ist alternativ möglich, sofern für das Klebemittel vorgesehene Klebeeigenschaften auch bei durch das Heizelement 16 erzeugter Hitze erhalten bleiben. Der Körper 19 ist aus einem flexiblen Material gebildet, das besonders hohe Wärmeleitfähigkeit aufweist.

Das erste Pressenteil 3 umfasst den Deckel 5 und eine Dichtvorrichtung 39, welche im Bereich der Vorsprünge 7 angeordnet ist und umfasst:
- einen Dichtrahmen 20, im Folgenden der Einfachheit halber "Rahmen 20" genannt, mit einer ersten Kontaktfläche 20.1 für den Deckel 5 des ersten Pressenteils 3 und mit einer zweiten Kontaktfläche 20.2 für das zweite Pressenteil 4,
- eine an der ersten Kontaktfläche 20.1 zwischen dem Deckel 5 und dem Rahmen 20 angeordnete Dichtung 24 und
- eine an der zweiten Kontaktfläche 20.2 zwischen dem Rahmen 20 und dem zweiten Pressenteil 4 angeordnete Dichtung 25.

Der Rahmen 20 wird durch Bolzen 21, die an einer Aussenseite 22 des Deckels 5 angelenkt sind gehalten. Die Bolzen 21 halten den Dichtrahmen 20 im Bereich der Vorsprünge 7 derart in Stellung, dass sie beabstandet zu einem Endbereich 23 der Vorsprünge 7 gehalten werden. Der Rahmen 20 ist somit zwischen dem Deckel 5 des ersten Pressenteils 3 und dem zweiten Pressenteil 4 angeordnet,

Die Dichtung 24 ist auf einer zu den Vorsprüngen 7 gelegenen Seite des Rahmens 20 angeordnet. Die Dichtung 24 weist eine kleine Ausnehmung auf, in der eine Schnurdichtung Aufnahme findet, die aus der Ausnehmung soweit herausragt, dass die Schnurdichtung in Kontakt mit den Vorsprüngen 7 steht. Die Schnurdichtung ist darüber hinaus aus einem flexiblen und zusammendrückbaren Material gebildet.

Die Dichtung 25 ist der Dichtung 24 gegenüberliegend auf einer zum zweiten Pressenteil 4 weisenden Seite des Rahmens 20 angeordnet und hat einen in etwa gleichen Aufbau wie die Abdichtung 24. Eine Schnurdichtung der Dichtung 25 ist ebenfalls aus einem flexiblen Material gebildet, wobei die Dichtung 25 in einem offenen Zustand der Laminierpresse 1 nicht an dem zweiten Pressenteil 4 anliegt.

Der Rahmen 20 weist eine Einrichtung auf, die es ermöglicht, einen Dichtkörper 26 an den Rahmen 20 anzuordnen. Die Anordnung des Dichtkörpers 26 an den Rahmen 20 erfolgt verbindungslos, der Dichtkörper 26 liegt auf dem Rahmen 20 auf, ist also nur lose mit diesem verbunden. Der Dichtkörper 26 erstreckt sich im Wesentlichen von dem Rahmen 20 aus in die Ausnehmung 6 des Deckels 5. Der Rahmen 20 ist dementsprechend ausgebildet, dass derselbige in einem Bereich unterhalb der Ausnehmung 6 endet. Wie aus Fig. 1 ersichtlich, weist der Heizkörper 15 ein Winkelelement 27 auf, welches am Rand der Platte 17 bzw. einem Ende der Kolben 13 angeordnet ist. Dichtkörper 26 ist zwischen dem Rahmen 20 und dem Winkelelement 27 angeordnet. Der Dichtkörper 26 ist mit einem unteren Bereich im vorliegenden Ausführungsbeispiel mit dem Rahmen 20 lose verbunden und mit einem oberen Bereich über das Winkelelement 27 mit dem Heizkörper 15 in Kontakt gebracht, wobei der Dichtkörper 26 auf den jeweils angrenzenden Teilen nur aufliegt. Durch geeignete Auslegung des Hubes der (Pneumatik-) Zylinder 10 besteht nur wenig vertikales Spiel. Damit die Dichtfunktion ermöglicht wird, werden die Pneumatikzylinder 10 ausgefahren.

Der Dichtkörper 26 ist ebenfalls aus einem flexiblen Material gebildet, wodurch der Dichtkörper 26 gestaucht werden kann und nach Entlastung wieder in seine ursprüngliche Form zurückkehrt. Der Dichtkörper 26 ist wie der Rahmen 20 (um das Solarmodul 2) umlaufend ausgebildet. Ebenso ist das Winkelelement 27 umlaufend ausgebildet und beschreibt mit dem Dichtkörper 26 zusammen einen geschlossenen Ring.

Der Heizkörper 15 mit dem Heizelement 16 und dem Körper 19 sind luftdicht ausgebildet, so dass der Heizkörper 15 mit dem Dichtkörper 26, dem Rahmen 20 und dem Deckel 5 eine geschlossene und dichte Einheit bildet. Mittels der Dichtung 24 im Bereich zwischen den Vorsprüngen 7 und dem Rahmen 20 ist die durch die Ausnehmung 6 gebildete Mulde in dem Deckel 5 in Richtung des zweiten unterhalb des ersten Pressenteils 3 gelegenen Pressenteils 4 luftdicht abgeschlossen. Ausschliesslich über den Be- und Entlüftungskanal 8 ist Luft zu- und abführbar.

Das zweite Pressenteil 4 weist eine Auflageplatte 28 auf, die unterhalb des Deckels 5 angeordnet ist. Auf einer zum Deckel 5 weisenden Seite der Auflageplatte 28 ist eine Auflagefläche 29 für das jeweilige Solarmodul 2 ausgebildet und ein Stützrahmen 30 angeordnet. Der Stützrahmen 30 entspricht in etwa einer Höhe des Solarmoduls 2 und spannt eine Fläche zwischen einzelnen Rahmenabschnitten auf, die grösser als ein zu laminierendes Solarmodul 2 ist. Der Stützrahmen 30 entspricht in seinen Abmessungen in etwa der Erstreckung des Heizkörpers 15 parallel zur Auflagefläche 29. Der Stützrahmen 30 dient als mechanischer Anschlag für den Heizkörper 15 und hat im vorliegenden Fall die Funktion eines Distanzhalters, welcher die Distanz zwischen dem Heizkörper 15 und der Auflagefläche 29 limitiert und eine zur Auflagefläche 29 gerichteten Bewegung des Heizkörpers 15 blockiert, wenn die Distanz zwischen dem Heizkörper 15 und der Auflagefläche 29 einen vorgegebenen Wert erreicht, welcher im vorliegenden Fall der Erstreckung des Stützrahmens 30 vertikal zur Auflagefläche 29 entspricht.

Die Auflageplatte 28 weist ein weiteres Heizelement auf, das in den Figuren nicht dargestellt ist. Das weitere Heizelement ist unmittelbar unterhalb der Auflagefläche 29 im Bereich der Auflage des Solarmoduls 2 auf der Auflageplatte 28 angeordnet. Das weitere Heizelement erwärmt bei Auflage des Solarmoduls 2 auf der Auflageplatte 28 das Solarmodul 2 von unterhalb.

Nachfolgend wird die Funktion der Laminierpresse 1 und der Prozess des Laminierens eines Solarmoduls 2 näher erläutert. Die Fig. 1 zeigt eine Laminierpresse 1 in offenem Zustand, bei der ein erstes (oberes) Pressenteil 3 beabstandet von einem zweiten (unteren) Pressenteil 4 angeordnet ist. Die beiden Pressenteile 3 und 4 korrespondieren zueinander und weisen im Wesentlichen eine gleiche Breite auf. Auf der Auflageplatte 28 des zweiten Pressenteils ist bereits ein Solarmodul 2 positioniert. Das Solarmodul 2 ist in etwa mittig angeordnet, zumindest aber innerhalb des Stützrahmens 30. Der Stützrahmen 30 ist derart dimensioniert, dass er zu beiden Seiten des Solarmoduls 2 beabstandet ist.

Die Zylinder 10 erlauben es, den Heizkörper 15 in vertikaler Richtung innerhalb der Laminierpresse 1 zu verfahren. Der Heizkörper 15 ist in etwa parallel zu dem Solarmodul 2, welches auf der Auflageplatte 28 angeordnet ist, ausgerichtet. Durch die Bewegung des Heizkörpers 15 in vertikaler Richtung wird der Heizkörper 15 gleichbleibend parallel zum Solarmodul 2 und der Auflageplatte 28 verfahren.

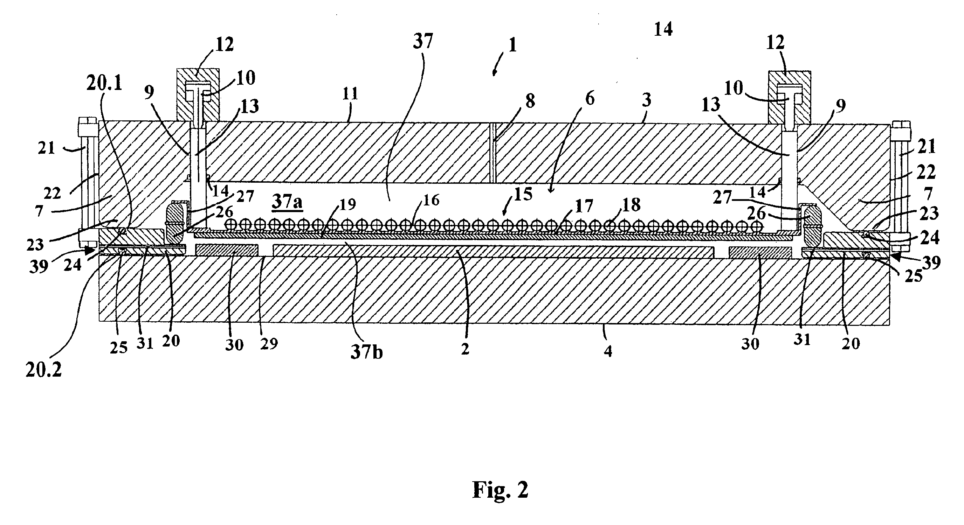

In Fig. 2 ist die Laminierpresse 1 in einem geschlossenen Zustand dargestellt. Dabei ist das erste Pressenteil 3 auf das zweite Pressenteil 4 abgesenkt. Durch die spezielle Ausformung des ersten Pressenteils 3 mit der Ausnehmung 6 und den Vorsprüngen 7 wird ein Hohlraum 37, auch Pressenraum genannt, gebildet, in welchem das Solarmodul 2 laminiert wird. Der Hohlraum 37 ist zweigeteilt, nämlich in eine erste Kammer 37a und eine zweite Kammer 37b, wobei die erste Kammer 37a im Bereich des ersten Pressenteils 3 und die zweite Kammer 37b im Bereich des zweiten Pressenteils 4 angeordnet ist. Die Unterteilung des Hohlraums 37 in die beiden Kammern 37a und 37b wird im Wesentlichen durch den Heizkörper 15 und den Dichtkörper 26 realisiert, wobei der Dichtkörper 26 im vorliegenden Fall mit dem Heizkörper 15 über das Winkelelement 27 und mit dem ersten Pressenteil 3 über den Rahmen 20 in Kontakt gebracht ist. Der Dichtkörper 26 und der Heizkörper 15 bilden demnach eine luftdichte Abgrenzung zwischen der ersten Kammer 37a und der zweiten Kammer 37b.

Die erste Kammer 37a und die zweite Kammer 37b sind jeweils evakuierbar und mit Druckluft beaufschlagbar. Hierfür weist der Deckel 5 den Be- und Entlüftungskanal 8 auf, über den der ersten Kammer 37a Luft entzogen und zugeführt werden kann. Bei abgesenktem ersten Pressenteil 3 ist die zweite Kammer 37b ebenfalls luftdicht abgeschlossen und nur über wenigstens einen (Be- und Ent-) Lüftungskanal 31 zugänglich. Der Lüftungskanal 31 ist in dem Rahmen 20 angeordnet und verläuft in etwa waagerecht von der zweiten Kammer 37b und mündet in den Raum ausserhalb der Laminierpresse 1. Die zweite Kammer 37b wird im vorliegenden liegenden Beispiel durch die Auflageplatte 28, den Rahmen 20 und die Mittel, welche die erste Kammer 37a von der zweiten Kammer 37b trennen (d.h. Heizkörper 15 und Dichtkörper 26), begrenzt.

Dadurch, dass der Hohlraum 37 mittels des Dichtkörpers 26 und des Heizkörpers 15 in zwei gasdicht voneinander separierte Kammern 37a und 37b unterteilt ist, können die beiden Kammern 37a und 37b jeweils unabhängig voreinander evakuiert oder mit Druck beaufschlagt werden. So kann beispielsweise in beiden Kammern ein Vakuum erzeugt werden, um das Solarmodul 2 vor dem Laminierprozess zu entgasen. Das Vakuum in der ersten Kammer 37a dient als Ausgleich für das Vakuum in der zweiten Kammer 37b, Das Vakuum in der ersten Kammer 37a verhindert, dass der Heizkörper 15 zusammen mit dem Heizelement 16 auf das Solarmodul 2 herabgezogen wird. In Fig. 2 ist ein solcher Prozessabschnitt dargestellt, bei dem noch kein Druck auf das Solarmodul 2 durch den Heizkörper 15 ausgeübt wird.

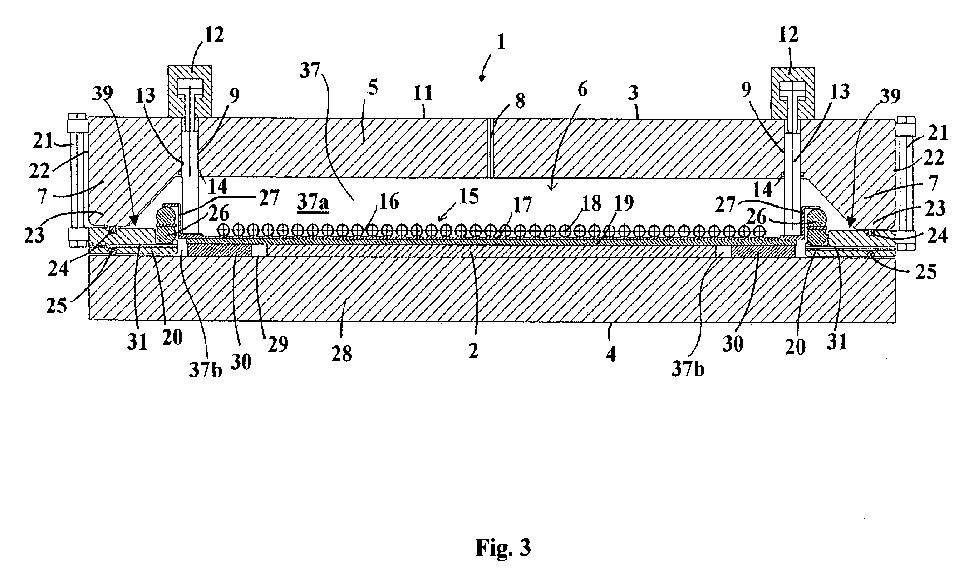

In Fig. 3 ist ein eigentlicher Laminierungsvorgang dargestellt. Die Zylinder 10 sind dabei ausgefahren und der Heizkörper 15 liegt auf dem Stützrahmen 30 auf, Durch die korrespondierende Höhe von Stützrahmen 30 und Solarmodul 2 steht auch der Heizkörper 15 mit der dem Heizkörper 15 zugewandten Seite des Solarmodul 2 in Kontakt. Der seitlich an dem Heizkörper 15 angeordnete Dichtkörper 26 ist in diesem Prozessabschnitt gestaucht. Während des Laminierens liegt in der zweiten Kammer 37b ein Vakuum vor, wohingegen die erste Kammer 37a mit einem Überdruck beaufschlagt ist. Dieser Überdruck hilft, den Heizkörper 15 auf das Solarmodul 2 zu drücken. Hierdurch wird ein Druck auf das Solarmodul 2 ausgeübt. Um zu erreichen, dass der Druck möglichst gleichmässig über die Oberfläche des Solarmoduls 2 verteilt wird, weist der Heizkörper 15 den (elastisch deformierbaren) Körper 19 auf, welcher zwischen dem Heizelement 16 bzw. der Platte 17 des Heizkörpers 15 und dem Solarmodul 2 angeordnet ist. Hierdurch können unerwünschte Kantenpressungen, welche Ränder bzw. Kanten des Solarmoduls 2 übermässig belasten, vermieden werden.

Der Stützrahmen 30 dient der Auflage des Heizkörpers 15, insbesondere zur Abstützung des Heizelementes 16 während des Pressvorganges. Durch die in etwa gleiche Höhe des Stützrahmens 30 und des Solarmoduls 2 wird der Heizkörper 15 auf eine definierte Höhe herabgelassen, so dass keine punktuellen oder linearen Kräfte auf dem Solarmodul 2 auftreten.

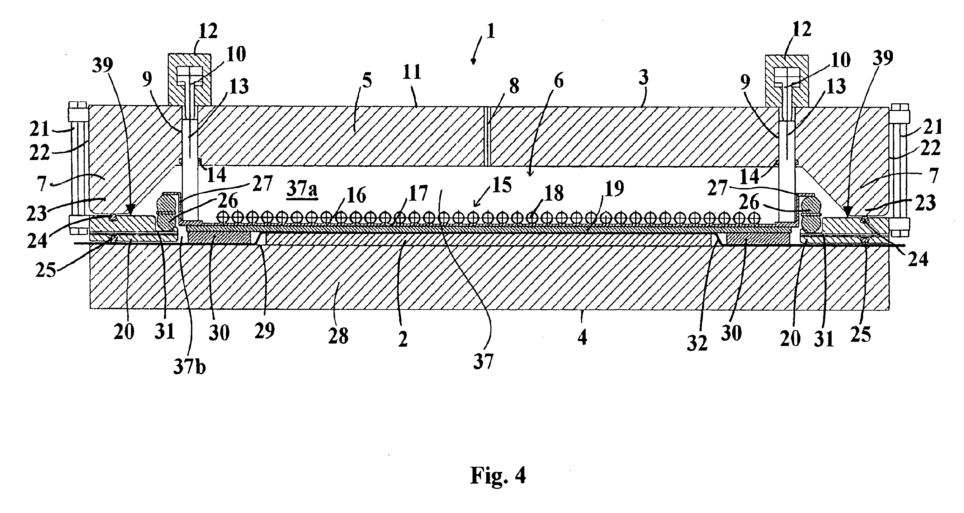

In einem weiteren Ausführungsbeispiel der Erfindung ist es auch denkbar, eine Verschmutzung des Körpers 19 zu verhindern, wenn das Solarmodul 2 laminiert wird. Hierfür wird, wie in Fig. 4 dargestellt, eine Schutzfolie 32 zwischen dem Heizkörper 15 bzw. dem Körper 19 und dem Solarmodul 2 positioniert. Vorteilhaft wird die Schutzfolie 32 zwischen Stützrahmen 30 und der Auflageplatte 28 geführt und durch den Rahmen 20 in Endbereichen der Auflageplatte 28 eingeklemmt. Der Stützrahmen 30 ist nur lose auf der Auflageplatte 28 angeordnet und wird mit der Vorbereitung des Laminierungsprozesses, sobald das Solarmodul 2 auf die Auflageplatte 28 aufgebracht wird, positioniert. Somit ist es leicht möglich, während dieses Arbeitsschrittes eine Schutzfolie 32 so anzuordnen, dass der gewünschte Schutz erzielt wird und gleichzeitig die Schutzfolie 32 in der gewünschten Stellung gehalten wird.

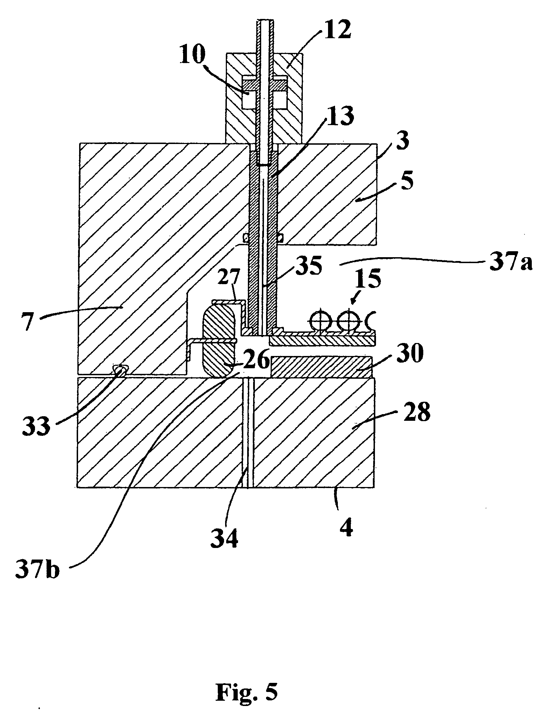

Fig. 5 zeigt ein weiteres Ausführungsbeispiel der Erfindung, gemäss welchem die Laminierpresse 1 ohne einen Rahmen 20 ausgeführt ist. In diesem Falle weist der Endbereich der Vorsprünge 7 eine einzelne Dichtung 33 auf, welche wie die Dichtungen 24 und 25, die im Zusammenhang mit dem Rahmen 20 gemäss Fig. 1-4 erwähnt wurden, als Schnurdichtung ausgeführt ist. Der Dichtkörper 26 ist direkt mit den Vorsprüngen 7 verbunden und bildet eine seitliche Abdichtung der erten Kammer 37a. Die Evakuierung bzw. die Belüftung der zweiten Kammer 37b erfolgt in dem zweiten Ausführungsbeispiel auf zweierlei Art. Einerseits weist die Auflageplatte 28 einen in die zweite Kammer 37b mündenden Be- und Entlüftungskanal 34 auf und andererseits ist es möglich, durch den Zylinder 10, bzw. den Kolben 13, eine Be- und Entlüftung der zweiten Kammer 37b zu ermöglichen, wobei der Zylinder 10 und der Kolben 13 zu diesem Zweck einen mittig angeordneten Kanal 35 aufweisen.

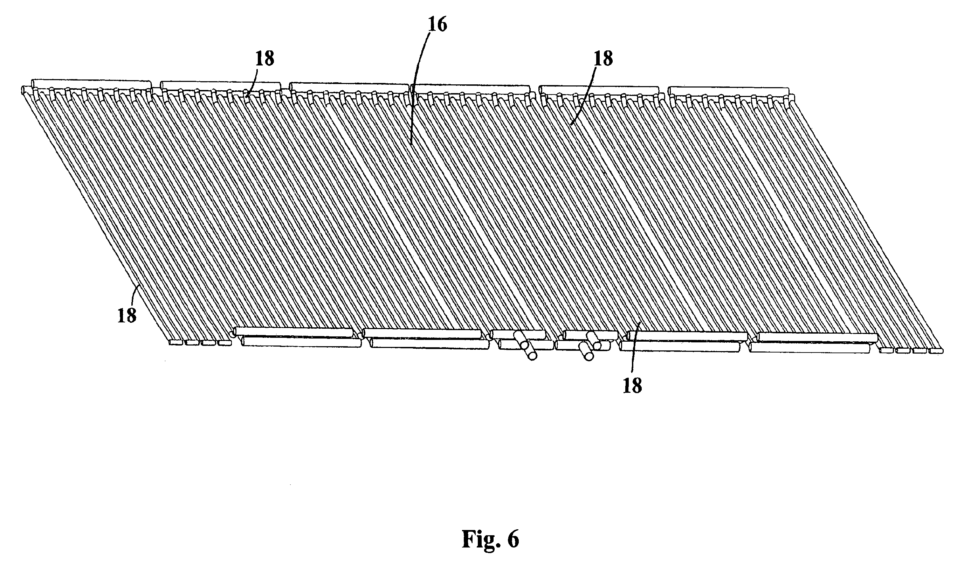

Fig. 6 zeigt ein in den Ausführungsformen gemäss Fig. 1-5 eingesetztes Heizelement 16. Das Heizelement 16 besteht aus nebeneinander angeordneten Heizmitteln 18. Die Heizmittel 18 können unterschiedlich ausgebildet sein. Einerseits sind die Heizmittel 18 als mit einem Hohlraum versehene Rohre ausgeführt, durch die ein Fluid zirkuliert. Als Fluid besonders geeignet ist ein erwärmtes Öl oder eine andere geeignete Flüssigkeit. Darüber hinaus kann als Heizmedium auch Heissluft oder ein anderes erwärmtes Gas Verwendung finden. Alternativ hierzu sind die Heizmittel als elektrische Widerstandsheizmittel oder als induktive Heizmittel denkbar, die oberhalb der Platte 17 des Heizkörpers 15 angeordnet sind. Sofern das Heizmittel 18 als Rohrkonstruktion ausgeführt ist, ist eine mögliche Anordnung der Rohre derart, dass Rohre aus einem Vorlauf immer neben Rohren aus einem Rücklauf angeordnet sind.

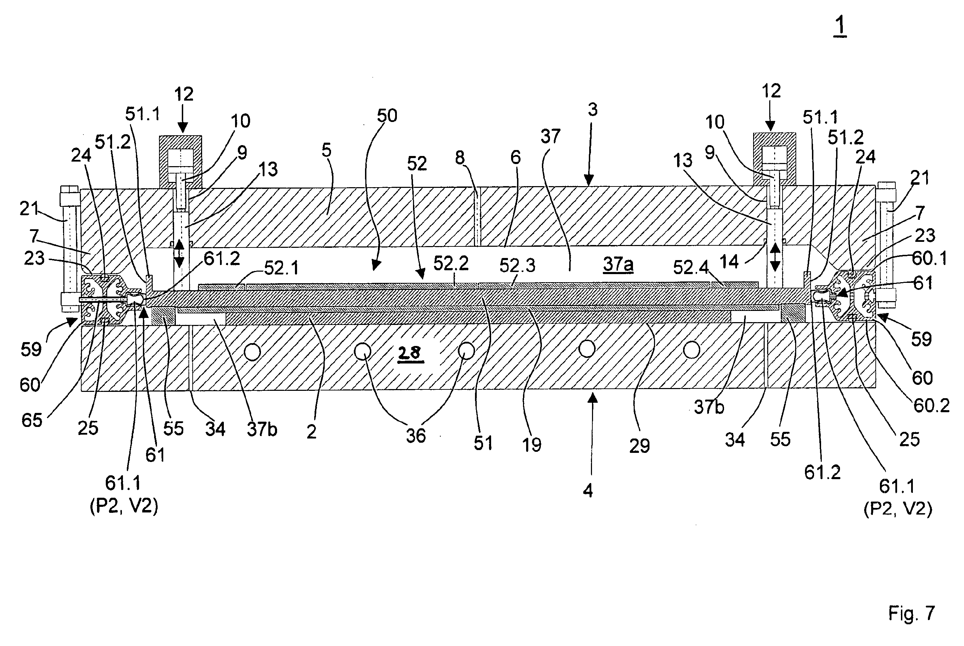

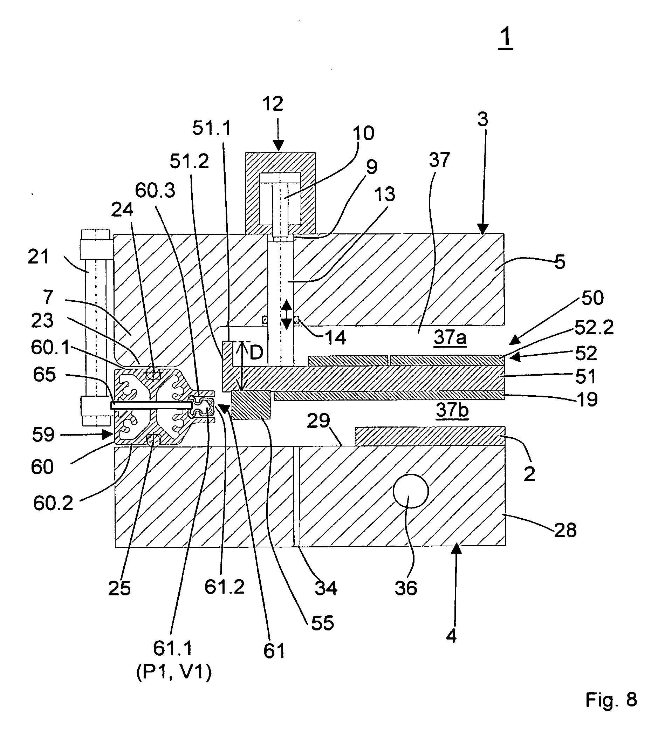

Fig. 7 und 8 zeigen eine weitere Ausführungsform der erfindungsgemässen Vorrichtung zum Laminieren eines Solarmoduls. Diese Ausführungsform umfasst eine Laminierpressepresse 1 zum Pressen und Erwärmen eines Solarmoduls 2.

Die Laminierpresse 1 gemäss Fig. 7 und 8 und die Ausführungen der Laminierpresse 1 gemäss Fig. 1-6 unterscheiden sich hinsichtlich verschiedener Einzelheiten, weisen aber ansonsten eine Reihe gleicher bzw. gleichwirkenden Merkmale auf, wobei jeweils gleiche bzw. gleichwirkende Merkmale der verschiedenen Ausführungsformen der Laminierpresse 1 gemäss Fig. 1-8 jeweils mit identischen Bezugszeichen versehen sind. Im folgenden sollen daher im Wesentlichen die Unterschiede zwischen der Ausführungsform gemäss Fig. 7 und 8 und den Ausführungsformen gemäss Fig. 1-6 erläutert werden.

Die Laminierpresse 1 gemäss Fig. 7 umfasst (wie die Laminierpresse gemäss Fig. 1-4) ein erstes Pressenteil 3 und ein zweites Pressenteil 4, welche Pressenteile relativ zu einander bewegbar sind und (wie im Falle der in Fig. 7 und 8 dargestellten geschlossenen Stellung der Laminierpresse 1) in eine Stellung bringbar sind, in welcher zwischen dem ersten Pressenteil 3 und dem zweiten Pressenteil 4 ein Hohlraum 37 ausgebildet ist, welcher über einen im ersten Pressenteil 3 ausgebildeten Be- und Entlüftungskanal 8 und/oder über im zweiten Pressenteil 4 ausgebildete Be- und Entlüftungskanäle 34 be- oder entlüftet werden kann.

Das zweite Pressenteil 4 der Laminierpresse 1 gemäss Fig. 7 umfasst eine im vorliegenden Beispiel im Wesentlichen horizontal angeordnete (Auflage-) Platte 28, an deren Oberseite eine (im vorliegenden Beispiel ebene) Auflagefläche 29 für das jeweilige Solarmodul 2 ausgebildet ist.

Die Laminierpresse umfasst ein zweites Heizelement, welches dazu dient, die Platte 28 zu heizen. Dieses zweite Heizelement ist im vorliegenden Beispiel gemäas Fig. 7 und 8 als ein System miteinander verbundener Kanäle 36 realisiert, welche in der Platte 28 ausgebildet sind und durch welche eine Heizflüssigkeit zirkulieren kann. Es ist auch möglich, eine gekühlte Flüssigkeit durch die Kanäle 36 zirkulieren zu lassen, um die Platte 28 zu kühlen.

Die Laminierpresse 1 gemäss Fig. 7 und 8 unterscheidet sich von der Laminierpresse gemäss Fig. 1-4 im wesentlichen durch die im Folgenden genannten konstruktiven Einzelheiten eines Heizkörpers 50 (im Vergleich zum Heizkörper 15 gemäss Fig. 1-4) und die im Folgenden genannten konstruktiven Einzelheiten einer Dichtvorrichtung 59 (im Vergleich zur Dichtvorrichtung 39 gemäas Fig. 1-4).

Der Heizkörper 50 ist plattenförmig ausgebildet und umfasst eine im Wesentlichen parallel zur Auflagefläche 29 angeordnete Platte 51 (aus einem wärmeleitfähigen Material, beispielsweise einem Metall, z.B. Stahl) und ein Heizelement 52 zum Heizen der Platte 51. Im vorliegenden Fall umfasst das Heizelement 52 mehrere mittels elektrischer Widerstandstandheizung erwärmbarer Heizmatten 52.1, 52.2, 52.3 und 52.4, welche auf der von der Auflagefläche 29 abgewandten Seite der Platte 51 angeordnet sind.

Wie Fig. 7 und 8 andeuten, weist die Platte 51 an ihrem Rand eine Seitenwand 51.1 auf, welche sich in einer Ebene parallel zur Auflagefläche 29 lückenlos entlang des Randes der Platte 51 und ausserdem senkrecht zur Auflagefläche 29 derart erstreckt, dass die Seitenwand auf der jeweiligen Aussenseite eine sich senkrecht zur Auflagefläche 29 erstreckende Seitenfläche 51.2 aufweist.

Wie Fig. 7 und 8 andeuten, ist der Heizkörper 50 am ersten Pressenteil 3 mit denselben Mitteln befestigt wie der Heizkörper 15 am ersten Pressenteil 3 im Falle der Laminierpresse 1 gemäss Fig. 1-4, d.h. mithilfe der jeweiligen Einrichtung 12 zur Lagerung des jeweiligen Zylinders 10 und dem in dem jeweiligen Aufnahmeschacht 9 geführten und mit dem Zylinder 10 und der Platte 51 des Heizköpers 50 verbundenen Kolben 13 ist es möglich, den Heizkörper 50 vertikal bezüglich der Auflagefläche 29 zu bewegen und den Abstand des Heizkörpers 50 bezüglich der Auflagefläche 29 zu verkleinern bzw. zu vergrössern (wie in Fig. 7 und 8 durch Doppelpfeile in Längsrichtung der Kolben 13 angegeben), um ein Pressen des jeweiligen Solarmoduls 2 zu ermöglichen. Wie Fig. 7 und 8 zeigen, ist jeweils ein Ende jeweiligen Kolbens 13 an der Platte 51 in der Nähe der Seitenwand 51.1 befestigt.

Wie Fig. 7 und 8 weiterhin andeuten, ist an der Platte 51 auf der der Auflagefläche 29 zugewandten Seite ein elastisch deformierbarer Körper 19 derart angeordnet, dass das jeweilige Solarmodul 2 beim Pressen des Solarmoduls 2 mittels des Körpers 19 von der Platte 51 separiert ist. Der Körper 19 weist bevorzugt eine Steifigkeit auf, welche geringer ist als die Steifigkeit der Platte 51. Der Körper 19 ist weiterhin so dimensioniert, dass er in einer Projektion auf eine zur Auflagefläche 29 parallele Ebene eine grössere Fläche bedeckt als das jeweilige Solarmodul 2. Der Körper 19 ist weiterhin bevorzugt aus einem wärmeleitfähigen Werkstoff gefertigt, um zu gewährleisten, dass das Heizelement 52 einen möglichst grossen Wärmefluss durch den Körper 19 erzeugen kann.

Die Fig. 7 und 8 zeigen den Heizkörper 50 in zwei verschiedenen Stellungen. Im Falle der Fig. 8 ist der Heizkörper derart weit von der Auflagefläche 29 entfernt, dass der Körper 19 nicht mit dem Solarmodul 2 in Kontakt gebracht ist. Im Falle der Fig. 7 ist der Heizkörper derart nah bezüglich der Auflagefläche 29 platziert, dass der Körper 19 mit dem Solarmodul 2 in Kontakt gebracht ist und das Solarmodul 2 unter einen Druck gesetzt bzw. gepresst wird.

Der Körper 19 hat (im Vergleich zu dem Fall, dass der Körper 19 nicht zwischen der Platte 51 und dem Solarmodul 2 platziert ist) den Effekt, dass die Kräfte, welche beim Pressen auf das jeweilige Solarmodul 2 wirken, möglichst homogen über das Solarmodul 2 verteilt werden können. Dadurch, dass der Körper 19 eine geringere Steifigkeit hat als die Platte 51, werden räumliche Druckschwankungen entlang der Oberfläche des Solarmoduls 2 reduziert. Insbesondere wird erreicht, dass das jeweilige Solarmodul 2 im Bereich von Kanten am Rand des Solarmoduls 2 nicht durch übermässig grosse Kräfte belastet wird (Reduktion von Kantenpressungen).

Wie Fig. 7 und 8 zeigen, ist die Laminierpresse mit einem oder mehreren Distanzhaltern 55 ausgestattet, welche eine Distanz zwischen dem Heizkörper 50 und der Auflagefläche 29 limitieren. Die jeweiligen Distanzhalter 55 sind derart zwischen dem Heizkörper 50 und der Auflagefläche 29 angeordnet, dass der jeweilige Distanzhalter 55 eine zur Auflagefläche 29 gerichtete Bewegung des Heizkörpers 50 blockiert, wenn die Distanz zwischen dem Heizkörper 50 und der Auflagefläche 29 einen vorgegebenen Wert erreicht. Im vorliegenden Fall sind die jeweiligen Distanzhalter 55 an der Platte 51 befestigt und insbesondere in der Nähe eines Randes der Platte 51 auf der der Auflagefläche 29 zugewandten Seite angeordnet. Im vorliegenden Fall dient die Auflagefläche 29 als mechanischer Anschlag. Eine zur Auflagefläche 29 gerichtete Bewegung des Heizkörpers 50 wird demnach blockiert, wenn die jeweiligen Distanzhalter an die Auflagefläche 29 stossen (wie in Fig. 7 dargestellt). Die Distanzhalter 55 verhindern, dass der Heizkörper 50 beim Pressen des jeweiligen Solarmoduls 2 verbogen und gegebenenfalls beschädigt wird. Um einen optimalen Effekt zu erzielen, wird eine optimale Grosse des jeweiligen Distanzhalter 55 in Abhängigkeit von den Abmessungen des jeweiligen Solarmoduls gewählt.

Die Dichtvorrichtung 59 umfasst:
- einen Dichtrahmen 60, im Folgenden der Einfachheit halber "Rahmen 60" genannt, mit einer ersten Kontaktfläche 60.1 für den Deckel 5 des ersten Pressenteils 3 und mit einer zweiten Kontaktfläche 60.2 für das zweite Pressenteil 4,
- eine an der ersten Kontaktfläche 60.1 zwischen dem Deckel 5 und dem Rahmen 60 angeordnete Dichtung 24 und
- eine an der zweiten Kontaktfläche 60.2 zwischen dem Rahmen 60 und dem zweiten Pressenteil 4 angeordnete Dichtung 25.

Wenn die Laminierpresse 1 - wie in Fig. 7 und 8 dargestellt - in die geschlossene Stellung gebracht ist, dann ist die Dichtvorrichtung 59 sowohl mit dem Deckel 5 des ersten Pressenteils 3 als auch mit dem zweiten Pressenteil 4 in Kontakt gebracht, um den Deckel 5 gegenüber dem zweiten Presseteil 4 abzudichten. Im vorliegenden Beispiel ist die Dichtvorrichtung 59 (mittels Bolzen 21) am Deckel 5 befestigt und kann deshalb zusammen mit dem Deckel 5 von dem zweiten Pressenteil 4 entfernt werden, um die Laminierpresse 1 in eine offene Stellung zu bringen und ein Laden der Laminierpresse 1 mit dem jeweiligen Solarmodul 2 zu ermöglichen. Aus diesem Grunde wird die Dichtvorrichtung 59 in diesem Zusammenhang der Einfachheit halber als Bestandteil des ersten Pressenteils 3 betrachtet. Es sei darauf hingewiesen, dass diese Zuordnung der Dichtvorrichtung 59 zum ersten Pressenteil 3 willkürlich ist und die Erfindung nicht limitiert. Die Dichtvorrichtung 59 könnte alternativ auch an der Auflageplatte 28 befestigt sein und als Bestanteil des zweiten Pressenteils 4 aufgefasst werden oder weder an dem Deckel 5 noch der Auflageplatte 28 befestigt sein und in diesem Fall weder als Bestandteil des ersten Pressenteils 3 noch als Bestandteil des zweiten Pressenteils 4 aufgefasst werden.

Der Rahmen 60 ist im vorliegenden Fall aus mehreren rohrartigen Hohlkörpern, welche beispielsweise als Strangpressprofile realisiert werden können, derart zusammengesetzt, dass der Rahmen 60 das jeweilige, auf die Auflagefläche 29 gelegte Solarmodul 2 und den Heizkörper 50 längs einer geschlossenen Kurve (ringförmig) umgibt.

Der Rahmen 60 weist eine Nut 60.3 auf, welche sich an einer dem Hohlraum 37 zugewandten Seite des Rahmens 60 längs einer geschlossenen, den Heizkörper 50 umgebenden Kurve erstreckt. Im vorliegenden Beispiel verläuft die Nut 60.3 über ihre gesamte Länge im Wesentlichen parallel zur Auflagefläche 29 und wird seitlich durch zwei Seitenwände begrenzt, welche ebenfalls im Wesentlichen parallel zur Auflagefläche 29 gerichtet sind und jeweils eine Flanke der Nut 60.3 bilden (Fig. 7 und 8).

In die Nut 60.3 ist ein Dichtkörper 61 eingelegt, welcher sich über die gesamte Länge der Nut 60.3 erstreckt.

Der Dichtkörper 61 umfasst einen flexiblen Schlauch 61.1, welcher im vorliegenden Beispiel eine ringförmig geschlossene, den Heizkörper 50 umgebende Struktur bildet.

Der Schlauch 61.1 ist aufblasbar, sodass das Volumen V des Schlauches 61.1 durch Verändern eines in einem Innenraum des Schlauchs 61.1 herrschenden Gasdrucks P verändert werden kann. Um ein Verändern des Gasdrucks P zu ermöglichen, ist der Innenraum des Schlauchs 61.1 mit einem Be- und Entlüftungskanal 65 (im Folgenden "Kanal 65") verbunden, über den ein Gas zugeführt bzw. abgeführt werden kann. Zu diesem Zweck kann der Kanal 65 beispielsweise mit konventionellen (in den Fig. 7 und 8 nicht dargestellten) Mitteln, z.B. mit einer Pumpe oder einem Druckluft-Reservoir, verbunden werden und ein Zufluss bzw. Abfluss von Gas mit einer geeigneten Steuervorrichtung kontrolliert werden.

Durch Verändern des Gasdrucks P kann die Erstreckung des Schlauchs 61.1 und somit des Dichtkörpers 61 parallel zur Auflagefläche 29 und somit relativ zum Heizkörper 50 verändert werden. Die Nut 60.3 und der Schlauch 61.1 sind derart geformt, dass der Schlauch 61.1 bei einer Erhöhung des Gasdrucks P im Wesentlichen ausschliesslich parallel zur Auflagefläche 29 in Richtung auf den Heizkörper 50 expandieren kann.

Der Gasdruck P im Schlauch bzw. das Volumen V des Schlauches 61.1 ist derart veränderbar ist, dass der Dichtkörper 61 bei einem ersten vorbestimmten Volumen nicht mit dem Heizkörper 50 in Kontakt ist und bei einem zweiten vorbestimmten Volumen mit dem Heizkörper 50 in Kontakt ist. Zur Erläuterung dieses Sachverhalts sei auf Fig. 7 und 8 verwiesen.

Fig. 8 zeigt den Schlauch 61.1 in einer Grundstellung (P=P1, V=V1): Die Erstreckung des Schlauchs 61.1 parallel zur Auflagefläche 29 ist derart gering, dass zwischen dem Dichtkörper 61 und dem Heizkörper 50 ein Zwischenraum (Spalt) ausgebildet ist und der Heizkörper 50 in vertikaler Richtung bewegt werden kann, ohne in Kontakt mit dem Dichtkörper 61 zu geraten.

In der in Fig. 7 dargestellten Situation ist der Gasdruck P und somit das Volumen V des Schlauchs 61.1 vergrössert (P=P2>P1, V=V2>V1): Der Schlauch 61.1 ist - im Vergleich zu der Situation gemäss Fig. 8 - expandiert, sodass seine Erstreckung parallel zur Auflagefläche 29 vergrössert ist, derart, dass der Dichtkörper 61 mit dem Heizkörper in Kontakt gebracht ist und den Zwischenraum zwischen dem Rahmen 60 und dem Heizkörper 50 ausfüllt bzw. schliesst.

Letzteres ist gemäss Fig. 7 zumindest dann der Fall, wenn der Heizkörper 50 in einem vorbestimmten Bereich in der Nähe des Solarmoduls 2 platziert ist, beispielsweise wenn der Heizkörper 50 so angeordnet ist, dass der Körper 19 das Solarmodul 2 berührt: Wie Fig. 7 andeutet, ist der Dichtkörper 61 nun auf einer Seite mit der Seitenfläche 51.2 der Platte 51 des Heizkörpers 50 und auf der der Seitenfläche 51.2 gegenüberliegenden Seite mit dem Rahmen 61 im Bereich der Nut 60.3 in Kontakt gebracht. Der Gasdruck P2 ist dabei so gewählt, dass der Dichtkörper 61 am Rahmen 60 luftdicht anliegt bzw. in der Nut 60.3 luftdicht eingebettet ist.

In der in Fig. 7 dargestellten Situation ist demnach der Dichtkörper 61 in einem Zwischenraum zwischen dem Heizkörper 50 und dem ersten Pressenteil 3 derart angeordnet und mit dem Heizkörper 50 und dem ersten Pressenteil 3 derart in Kontakt gebracht bzw. bringbar, dass der Hohlraum 37 durch den Heizkörper 50 und den Dichtkörper 61 in zwei Kammern 37a, 37b unterteilt ist, wobei die beiden Kammern 37a und 37b luftdicht gegeneinander separiert sind. Im vorliegenden Fall umfasst die Kammer 37b die Auflagefläche 29 und dient somit der Aufnahme des jeweiligen Solarmoduls 2.

Wie Fig. 7 andeutet, kann der jeweilige Gasdruck (Pa) in der Kammer 37a mittels eines Zuflusses oder Abflusses von Gas über den Be- und Entlüftungskanal 8 im ersten Pressenteil 3 verändert werden, während der jeweilige Gasdruck (Pb) in der Kammer 37b mittels eines Zuflusses oder Abflusses von Gas über die Be- und Entlüftungskanäle 34 im zweiten Pressenteil 4 verändert werden kann. Die Be-und Entlüftungskanäle 34 und 8 sind im vorliegenden Fall voneinander getrennt. Falls das Dichtelement 61 durch eine geeignete Wahl des Gasdrucks P im Schlauch 61.1 in einen Zustand versetzt ist, in dem es die Kammern 37a und 37b luftdicht voneinander separiert, ist es dementsprechend möglich, die Gasdrücke Pa bzw. Pb in den Kammern 37a bzw. 37b unabhängig voneinander zu verändern. Beispielsweise ist in den Kammern 37a und 37b - unabhängig voneinander - ein Vakuum oder ein Überdruck erzeugbar.

Um die Dichtwirkung des Dichtkörpers 61 vorteilhaft zu gestalten und weiterhin vorteilhafte Anwendungsmöglichkeiten der Laminierpresse 1 gemäss Fig. 7 und 8 zu erschliessen, sind eine Reihe von Massnahmen möglich.

Wie Fig. 7 und 8 andeuten, kann ein Teil der Oberfläche des Dichtelements 61 als Dichtstreifen 61.2 ausgebildet sein, welcher an der dem Heizkörper 50 zugewandten Seite des Schlauchs 61.1 angeordnet und mit dem Schlauch 61.1 verbunden ist. Dieser Dichtstreifen 61.2 kann bevorzugt lückenlos über die gesamte Länge des Schlauchs 61.1 ausgebildet sein. Die dem Heizkörper 50 zugewandte Oberfläche des Dichtstreifens 61.2 ist - unabhängig vom Gasdruck P im Schlauch 61.1 - jeweils parallel zur Seitenfläche 51.2 des Heizkörpers 50 ausgebildet und weist parallel zur Seitenfläche 51.2 des Heizkörpers 50 eine Erstreckung auf, welche (nahezu) unabhängig vom Gasdruck P im Schlauch 61.1 ist. Dies hat den Vorteil, dass das Dichtmittel 61, wenn es beim Aufblasen des Schlauches 61.1 mit der Seitenfläche 51.2 des Heizkörpers 50 in Kontakt gebracht wird, mit der Seitenfläche 51.2 jeweils gleichzeitig mit einem definierten, relativ grossen Abschnitt der Seitenfläche 51.2 in Kontakt gebracht werden kann. Diese Massnahme ermöglicht es, die Dichtwirkung des Dichtkörpers 61 während eines Kontakts mit der Seitenfläche 51.2 zu erhöhen und vereinfacht eine Kontrolle des Gasdrucks P, um gewährleisten zu können, dass der Dichtkörper 61 die Kammern 37a und 37b auf eine zuverlässige Weise gasdicht voneinander trennt.

Wie Fig. 7 und 8 weiterhin andeuten, ist der Schlauch 61.1 so ausgebildet, dass seine Schlauchwand bei einem geringen Gasdruck P (z.B. P=P1 gemäss Fig. 8) innerhalb der Nut 60.3 eine oder mehre im Wesentlichen parallel zur Seitenfläche 51.2 verlaufende Falten bildet. Mit dieser Massnahme wird erreicht, dass der Schlauch 61.1 bei einer relativ kleinen Änderung des Gasdrucks P um eine relativ grosse Distanz in Richtung auf die Seitenfläche 51.2 expandieren kann. Die vorstehend genannten Massnahmen ermöglichen es demnach, mittels einer relativ kleinen Änderung des Gasdrucks P eine für einen Gasfluss offene Verbindung zwischen den Kammern 37a und 37b herzustellen oder die Kammern 37a und 37b gasdicht voneinander zu separieren. Auf diese Weise ist es möglich, die jeweilige Dichtwirkung des Dichtkörpers 61 zu verändern und jede Änderung der Dichtwirkung des Dichtkörpers 61 präzise und schnell zu steuern.

Wie insbesondere aus Fig. 8 weiterhin ersichtlich, ist die Erstreckung D der Seitenfläche 51.2 der Platte 51 des Heizkörpers 50 - in Richtung einer Vertikalen bezüglich der Auflagefläche 29 - grösser als die Breite der Nut 60.3 bzw. die Breite des Dichtstreifens 61.2 (jeweils gemessen in Richtung einer Vertikalen bezüglich der Auflagefläche 29). Diese konstruktiven Massnahmen bieten mehrere Vorteile. Dadurch, dass die Erstreckung D grösser als die Breite der Nut 60.3 bzw. die Breite des Dichtstreifens 61.2 ist, kann der Abstand des Heizkörpers 10 bezüglich der Auflagefläche 29 über einen relativ grossen Bereich variiert werden, wobei der Dichtkörper 61 jeweils durch eine Erhöhung des Gasdrucks P von P=P1 (Fig. 8) auf P=P2 (Fig. 7) mit der Seitenfläche 51.2 in Kontakt gebracht werden kann, um die Kammern 37a und 37b gasdicht voneinander zu separieren. Dadurch, dass der Dichtkörper 61 von der Seitenfläche 51.2 separiert werden kann (z.B. durch eine Absenkung des Gasdrucks p auf P=P1), kann der Abstand des Heizköpers 50 relativ zur Auflagefläche 29 verändert werden, ohne dass der Dichtkörper 61 mechanisch belastet wird. Dadurch, dass die Expansion des Schlauchs 61.1 im Wesentlichen senkrecht zur Seitenfläche 51.2 erfolgt, ist die Dichtwirkung des Dichtkörpers 61.2 im Wesentlichen unabhängig vom Abstand des Heizköpers 50 relativ zur Auflagefläche 29.

Die vorstehend genannten Eigenschaften des Dichtkörpers 61 ermöglichen es deshalb, die Erstreckung der Kammern 37a und 37b senkrecht zur Auflagefläche 29 einfach und schnell innerhalb vorgegebener Grenzen zu verändern und die beiden Kammern 37a und 37b jeweils mithilfe desselben Dichtkörpers 61 gasdicht zu separieren, ohne den Dichtkörper 61 bei der genannten Veränderung der Kammern 37a und 37b mechanisch belasten zu müssen und ohne den jeweiligen Dichtkörper 61 durch einen anderen Dichtkörper ersetzen zu müssen.

Aus den vorstehend genannten Gründen ist die in den Fig. 7 und 8 dargestellte Laminierpresse 1 besonders gut dafür geeignet, Solarmodule 2 unterschiedlicher Dicke zu bearbeiten. Abhängig davon, über welchen Bereich die Dicken der jeweils zu bearbeitenden Solarmodule 2 schwanken, genügt es, die Erstreckung D der Seitenfläche 51.2 genügend gross zu wählen.

Im Betrieb kann die Laminierpresse 1 gemäss Fig. 7 und 8 wie folgt verwendet werden. Ausgehend von der Situation gemäss Fig. 8, in welcher bereits ein Solarmodul 2 auf der Auflagefläche 29 platziert und die Pressenteile 3 und 4 in eine Lage gebracht wurden, in welcher die Laminierpresse 1 geschlossen ist, befindet sich der Heizkörper 50 zunächst in einem Abstand zum Solarmodul 2. Weiterhin ist das Volumen V des Schlauchs 61.1 derart eingestellt, dass das Dichtelement 61 nicht in Kontakt mit dem Heizkörper 50 ist, sodass die beiden Kammern 37a und 37b des Hohlraums 37 nicht luftdicht separiert sind (z.B. P=P1, V=V1). Anschliessend wird der Heizkörper 50 in Richtung auf das Solarmodul bewegt, bis der Heizkörper 50 (bzw. der Körper 19) das Solarmodul 2 berührt. Anschliessend wird der Schlauch 61.1 expandiert, bis der Dichtkörper 61 mit der Seitenwand 51.2 in Kontakt gebracht ist, sodass die beiden Kammern 37a und 37b luftdicht voneinander separiert sind (z.B. P=P2, V=V2 gemäss Fig. 7). Anschliessend können die im Zusammenhang mit Fig. 1-6 beschriebenen Verfahrensschritte durchgeführt werden.

## Patentansprüche

1. Vorrichtung zum Laminieren eines Solarmoduls (2),
mit einer Presse (1) zum Pressen und Erwärmen des jeweiligen Solarmoduls (2), welche Presse (1) umfasst:
a) ein erstes Pressenteil (3) und ein zweites Pressenteil (4), welche Pressenteile (3, 4) relativ zu einander bewegbar sind und in eine vorgegebene Stellung bringbar sind, in welcher zwischen dem ersten und dem zweiten Pressenteil (3, 4) ein Hohlraum (37) ausgebildet ist, welcher Hohlraum (37) evakuierbar ist,
b) eine im Hohlraum (37) angeordnete Auflagefläche (29) für das jeweilige Solarmodul (2),
c) einen Heizkörper (50), welcher im Hohlraum (37) angeordnet ist und relativ zum ersten Pressenteil (3) und zum zweiten Pressenteil (4) und zur Auflagefläche (29) derart bewegbar ist, dass das jeweilige Solarmodul (2) mittels des Heizkörpers (15, 50) gegen die Auflagefläche (29) pressbar ist, und
d) einen oder mehrere Dichtkörper ( 61), wobei die jeweiligen Dichtkörper (61) in einem Zwischenraum zwischen dem Heizkörper (50) und dem ersten Pressenteil (3) und/oder in einem Zwischenraum zwischen dem Heizkörper (50) und dem zweiten Pressenteil (4) derart angeordnet sind, dass sie einen geschlossenen, um den Heizkörper (50) umlaufenden Ring bilden,
**dadurch gekennzeichnet, dass**
die jeweiligen Dichtkörper (61) jeweils einen flexiblen Schlauch (61.1) umfassen, dessen Volumen (V) durch Verändern eines im Schlauch (61.1) herrschenden Drucks (P) veränderbar ist,
wobei die jeweiligen Dichtkörper (61) bei einem ersten vorbestimmten Volumen (V1) nicht mit dem Heizkörper (50) und/oder einem der Pressenteile (3, 4) in Kontakt sind und bei einem zweiten vorbestimmten Volumen (V2) mit dem Heizkörper (50) und mindestens einem der Pressenteile (3, 4) derart in Kontakt gebracht sind, dass der Hohlraum (37) durch den Heizkörper (50) und die jeweiligen Dichtkörper (61) in mindestens zwei Kammern (37a, 37b) unterteilt ist, welche luftdicht gegeneinander separiert sind,
wobei eine der Kammern (37a, 37b) die Auflagefläche (29) umfasst.

2. Vorrichtung nach Anspruch 1, wobei
eine der Kammern (37a) zwischen dem ersten Pressenteil (3), den jeweiligen Dichtkörpern (61) und dem Heizkörper (50) ausgebildet ist und eine andere der Kammern (37b) zwischen dem zweiten Pressenteil (4), den jeweiligen Dichtkörpern (26, 61) und dem Heizkörper (50) ausgebildet ist.

3. Vorrichtung nach einem der Ansprüche 1 oder 2, wobei die jeweiligen Dichtkörper (61) derart angeordnet sind, dass sie einen geschlossenen, um das jeweilige Solarmodul (2) umlaufenden Ring bilden.

4. Vorrichtung nach einem der Ansprüche 1-3,
mit Mitteln zum Variieren des in dem Schlauch herrschenden Drucks.

5. Vorrichtung nach einem der Ansprüche 1-4, wobei der Schlauch (61.1) aufblasbar ist und die Vorrichtung Mittel (65) zum Verändern eines im Schlauch (61.1) herrschenden Gasdrucks (P1, P2) aufweist.

6. Vorrichtung nach einem der Ansprüche 1-5, wobei
das jeweilige Dichtelement (61) einen Dichtstreifen (61.2) umfasst, welcher an einer dem Heizkörper (50) zugewandten Seite des Schlauchs (61.1) angeordnet und mit dem Schlauch (61.1) verbunden ist,
wobei der Dichtstreifen (61.2) mit einer Seitenfläche (51.2) des Heizkörpers (50) in Kontakt gebracht ist, wenn das Volumen des Schlauchs (61.1) gleich dem zweiten vorbestimmten Volumen (V2) ist.

7. Vorrichtung nach einem der Ansprüche 1-6, wobei
der Heizkörper (50) an einem der Pressenteile (3) bewegbar befestigt ist, mit Mitteln (10, 12, 13) zum Bewegen des Heizkörpers (50) senkrecht zur Auflagefläche (29).

8. Vorrichtung nach einem der Ansprüche 1-7, wobei der Heizkörper (50) umfasst:
eine Platte (51) und
mindestens ein erstes Heizelement (16, 52) zum Heizen der Platte (51), wobei das jeweilige Heizelement (52) auf einer von der Auflagefläche (29) abgewandten Seite der Platte (51) angeordnet ist.

9. Vorrichtung nach Anspruch 8, wobei
an der Platte (51) auf einer der Auflagefläche (29) zugewandten Seite ein elastisch deformierbarer Körper (19) derart angeordnet ist, dass das jeweilige Solarmodul (2) beim Pressen des Solarmoduls (2) mittels dieses elastisch deformierbaren Körpers (19) von der Platte (51) separiert ist, wobei der elastisch deformierbare Körper (19) eine Steifigkeit aufweist, welche geringer ist als die Steifigkeit der Platte (51).

10. Vorrichtung nach Anspruch 9, wobei der elastisch deformierbare Körper (19) als eine aus einem elastischen Material gebildete Matte oder als ein mit einer Flüssigkeit gefülltes Kissen ausgebildet ist.

11. Vorrichtung nach einem der Ansprüche 8-10, wobei das erste Heizelement (16) mehrere Heizmittel (18, 52.1, 52.2, 52.3, 52.4) aufweist, welche auf der von der Auflagefläche (29) abgewandten Seite der Platte (17, 51) räumlich verteilt angeordnet sind.

12. Vorrichtung nach einem der Ansprüche 8-11, wobei das erste Heizelement (52) umfasst:
ein oder mehrere Rohre (18), wobei die jeweiligen Rohre (18) mit einer Heizflüssigkeit gefüllt oder füllbar sind; und/oder
ein oder mehrere elektrische Widerstandsheizelemente (52.1, 52.2, 52.3, 52.4); und/oder ein oder mehre induktive Heizelemente; und/oder eine oder mehre Strahlungsquellen; und/oder ein oder mehrere Mittel zum Einleiten von Heissluft.

13. Vorrichtung nach einem der Ansprüche 1-12, wobei eines der Pressenteile (4) eine Auflageplatte (28) für das jeweilige Solarmodul (2) umfasst, auf einer Seite der Auflageplatte (28) die Auflagefläche (29) für das jeweilige Solarmodul (2) ausgebildet ist und die Vorrichtung, mindestens ein zweites Heizelement (36) zum Heizen der Auflageplatte (28) umfasst.

## Claims

1. An apparatus for laminating a solar module (2), with a press (1) for pressing and heating the respective solar module (2), which press (1) comprises:
a) a first press part (3) and a second press part (4), which press parts (3, 4) are movable relative to one another and can be brought into a predetermined position in which a cavity (37) is configured between the first and the second press part (3, 4), which cavity (37) can be evacuated,
b) a bearing surface (29) for the respective solar module (2) disposed in the cavity (37),
c) a heater (50), which is disposed in the cavity (37) and which is movable relative to the first press part (3) and to the second press part (4) and to the bearing surface (29) in such a manner that the respective solar module (2) can be pressed by means of the heater (15, 50) with respect to the bearing surface (29), and
d) one or more sealing bodies (61), wherein the respective sealing bodies (61) are disposed in an intermediate space between the heater (50) and the first press part (3) and/or in an intermediate space between the heater (50) and the second press part (4) in such a manner that they form a closed ring that runs around the heater (50),
**characterised in that**,
the respective sealing bodies (61) in each case comprise a flexible hose (61.1), the volume (V) of which can be altered by varying a pressure (P) prevailing in the hose (61.1), wherein
the respective sealing bodies (61) at a first predetermined volume (V1) are not in contact with the heater (50) and/or one of the press parts (3, 4), and at a second predetermined volume (V2) are brought into contact with the heater (50) and at least one of the press parts (3, 4) in such a manner that the cavity (37) is divided by the heater (50) and the respective sealing bodies (61) into at least two chambers (37a, 37b), which are separated from one another in an airtight manner, wherein
one of the chambers (37a, 37b) comprises the bearing surface (29).

2. The apparatus according to claim 1, wherein
one of the chambers (37a) is formed between the first press part (3), the respective sealing bodies (61), and the heater (50), and another of the chambers (37b) is configured between the second press part (4), the respective sealing bodies (26, 61), and the heater (50).

3. The apparatus according to anyone of claims 1 or 2, wherein
the respective sealing bodies (61) are disposed in such a manner that they form a closed ring that runs around the respective solar module (2).

4. The apparatus according to anyone of claims 1-3,
with means for varying the pressure prevailing in the hose.

5. The apparatus according to anyone of claims 1-4, wherein
the hose (61.1) is inflatable, and the apparatus has means (65) for varying a gas pressure (P1, P2) prevailing in the hose (61.1).

6. The apparatus according to anyone of claims 1-5, wherein
the respective sealing element (61) comprises a sealing strip (61.2), which is disposed on a side of the hose (61.1) facing the heater (50) and is connected with the hose (61.1), wherein
the sealing strip (61.2) is brought into contact with a side surface (51.2) of the heater (50), if the volume of the hose (61.1) is equal to the second predetermined volume (V2).

7. The apparatus according to anyone of claims 1-6, wherein
the heater (50) is movably fastened to one of the press parts (3), with means (10, 12, 13) for moving the heater (50) perpendicularly to the bearing surface (29).

8. The apparatus according to anyone of claims 1-7, wherein
the heater (50) comprises:
a plate (51) and
at least one first heating element (16, 52) for heating the plate (31), wherein
the respective heating element (52) is disposed on a side of the plate (31) facing away from the bearing surface (29).

9. The apparatus according to claim 8, wherein
an elastically deformable body (19) is disposed on the plate (51) on a side facing the bearing surface (29) in such a manner that during the pressing of the solar module (2) the respective solar module (2) is separated by means of this elastically deformable body (19) from the plate (51), wherein the elastically deformable body (19) has a stiffness that is less than the stiffness of the plate (51).

10. The apparatus according to claim 9, wherein
the elastically deformable body (19) is configured as a mat formed from an elastic material, or as a cushion filled with a fluid.

11. The apparatus according to anyone of claims 8-10, wherein
the first heating element (16) has a plurality of heating means (18, 52.1, 52.2, 52.3, 52.4), which are disposed in a spatially distributed manner on the side of the plate (17, 51) facing away from the bearing surface (29).

12. The apparatus according to anyone of claims 8-11, wherein
the heater (52) comprises:
one or a plurality of tubes (18), wherein
the respective tubes (18) are filled, or can be filled, with a heating fluid; and/or
one or a plurality of electrical resistance heating elements (52.1, 52.2, 52.3, 52.4); and/or
one or more inductive heating elements; and/or
one or more radiation sources, and/or
one or a plurality of means for the introduction of heating air.

13. The apparatus according to anyone of claims 1 -12, wherein
one of the press parts (4) comprises a bearing plate (28) for the respective solar module (2), on one side of the bearing plate (28) the bearing surface (29) is configured for the respective solar module (2), and the apparatus comprises at least one second heating element (36) for heating the bearing plate (28).

## Revendications

1. Dispositif pour laminer un module solaire (2), avec une presse (1) pour presser et chauffer le module solaire (2) respectif, laquelle presse (1) comprend :
a) un premier élément de presse (3) et un deuxième élément de presse (4), lesquels éléments de presse (3, 4) peuvent être déplacés l'un par rapport à l'autre et peuvent être mis dans une position prescrite dans laquelle un espace creux (37) est formé entre le premier et deuxième élément de presse (3, 4), lequel espace creux (37) peut être évacué,
b) une surface de support (29) pour le module solaire respectif (2), disposée dans l'espace creux (37),
c) un corps de chauffe (50), lequel est disposé dans l'espace creux (37) et peut être déplacé par rapport au premier élément de presse (3) et au deuxième élément de presse (4) et à la surface de support (29) de manière à ce que le module solaire (2) respectif puisse être pressé à l'aide du corps de chauffe (15, 50) contre la surface de support (29), et
d) un ou plusieurs corps d'étanchéité (61), les corps d'étanchéité (61) respectifs étant disposés dans un espace intermédiaire entre le corps de chauffe (50) et le premier élément de presse (3) et/ou dans un espace intermédiaire entre le corps de chauffe (50) et le deuxième élément de presse (4) de manière à ce qu'ils forment un anneau fermé faisant le tour du corps de chauffe (50),
**caractérisé en ce que**
les corps d'étanchéité (61) respectifs comprennent respectivement un tuyau flexible (61.1) dont le volume (V) peut être modifié en modifiant une pression (P) régnant dans le tuyau (61.1),
les corps d'étanchéité (61) respectifs, en cas d'un premier volume (VI) prédéterminé, n'étant pas en contact avec le corps de chauffe (50) et/ou l'un des éléments de presse (3, 4), et en cas d'un deuxième volume (V2) prédéterminé, étant mis en contact avec le corps de chauffe (50) et au moins l'un des éléments de presse (3, 4) de manière à ce que l'espace creux (37) soit subdivisé, grâce au corps de chauffe (50) et aux éléments d'étanchéité (61) respectifs, en au moins deux compartiments (37a, 37b), lesquels sont séparés les uns des autres de manière étanche à l'air,
l'un des compartiments (37a, 37b) comprenant la surface de support (29).

2. Dispositif selon la revendication 1, dans lequel l'un des compartiments (37a) est réalisé entre le premier élément de presse (3), les corps d'étanchéité (61) respectifs, et le corps de chauffe (50), et un autre des compartiments (37b) étant réalisé entre le deuxième élément de presse (4), les corps d'étanchéité (26, 61) respectifs et le corps de chauffe (50).

3. Dispositif selon l'une des revendications 1 ou 2, dans lequel les corps d'étanchéité (61) respectifs sont disposés de manière à ce qu'ils forment un anneau fermé faisant le tour du module solaire (2) respectif.

4. Dispositif selon l'une des revendications 1-3, avec des moyens pour faire varier la pression régnant dans le tuyau.

5. Dispositif selon l'une des revendications 1-4, dans lequel le tuyau peut être gonflé, et le dispositif présentant des moyens (65) pour modifier une pression de gaz (P1, P2) régnant dans le tuyau (61.1).

6. Dispositif selon l'une des revendications 1-5, dans lequel
l'élément d'étanchéité (61) respectif comprend une bande d'étanchéité (61.2), laquelle est disposée sur un côté du tuyau (61.1) tourné vers le corps de chauffe (50) et est reliée au tuyau (61.1),
la bande d'étanchéité (61.2) étant mise en contact avec une surface latérale (51.2) du corps de chauffe (50) lorsque le volume du tuyau (61.1) est égal au deuxième volume (V2) prédéterminé.

7. Dispositif selon l'une des revendications 1-6, dans lequel
le corps de chauffe (50) est fixé de manière mobile sur l'un des éléments de presse (3) avec des moyens (10, 12, 13) pour faire bouger le corps de chauffe (50) perpendiculairement à la surface de support (29).

8. Dispositif selon l'une des revendications 1-7, dans lequel
le corps de chauffe (50) comprend :
une plaque (51) et
au moins un premier élément de chauffage (16, 52) pour chauffer la plaque (51), l'élément de chauffage (52) respectif étant disposé sur un côté de la plaque (51) tournant le dos à la surface de support (29).

9. Dispositif selon la revendication 8, dans lequel
un corps déformable élastiquement (19) est disposé sur la plaque (51), sur un côté en vis-à-vis de la surface de support (29), de manière à ce que le module solaire (2) respectif, en pressant le module solaire (2), soit séparé de la plaque (51) à l'aide de ce corps déformable élastiquement (19), moyennant quoi le corps déformable élastiquement (19) présente une rigidité qui est inférieure à la rigidité de la plaque (51).

10. Dispositif selon la revendication 9, dans lequel
le corps déformable élastiquement (19) est réalisé en tant qu'une natte formée en un matériau élastique ou en tant qu'un coussin rempli d'un liquide.

11. Dispositif selon l'une des revendications 8-10, dans lequel le premier élément de chauffage (16) présente plusieurs moyens de chauffage (18, 52.1, 52.2, 52.3, 52.4) qui sont disposés de manière répartie dans l'espace sur le côté de la plaque (17, 51) tournant le dos à la surface de support (29).

12. Dispositif selon l'une des revendications 8-11, dans lequel
le premier élément de chauffage (52) comprend :
un ou plusieurs tuyaux (18), les tuyaux (18) respectifs étant remplis avec un liquide de chauffage ou pouvant être remplis avec celui-ci ; et/ou
un ou plusieurs éléments de chauffage résistifs (52.1, 52.2, 52.3, 52.4) électriques ; et/ou
un ou plusieurs éléments de chauffage inductifs ; et/ou
une ou plusieurs sources de rayonnement ; et/ou
un ou plusieurs moyens pour introduire de l'air chaud.

13. Dispositif selon l'une des revendications 1-12, dans lequel l'un des éléments de presse (4) comprend une plaque de support (28) pour le module solaire (2) respectif, la surface de support (29) pour le module solaire (2) respectif étant formée sur un côté de la plaque de support (28) et le dispositif comprenant au moins un deuxième élément de chauffage (36) pour chauffer la plaque de support (28).
